# EUROPEAN PATENT SPECIFICATION

(11) **EP 3 041 246 B1**
(45) Date of publication and mention of the grant of the patent: **19.09.2018**
(21) Application number: 14840165.6
(22) Date of filing: 20.02.2014
(51) Int. Cl.: H04N 21/422, H04N 21/431, H04N 21/466, H04N 5/445, H04N 21/482, G06F 3/048, H04N 5/44, H04N 21/4402

(54) **REMOTE CONTROL SYSTEM, REMOTE CONTROL, DISPLAY DEVICE, AND REMOTE CONTROL METHOD**
FERNSTEUERUNGSSYSTEM, FERNSTEUERUNG, ANZEIGEVORRICHTUNG UND FERNSTEUERUNGSVERFAHREN
SYSTÈME DE TÉLÉCOMMANDE, TÉLÉCOMMANDE, DISPOSITIF D'AFFICHAGE ET PROCÉDÉ DE TÉLÉCOMMANDE

(30) Priority: 30.08.2013 CN 201310390610
(43) Date of publication of application: 06.07.2016
(73) Proprietor: Xiaomi Inc., Beijing 100085 (CN)
(72) Inventor: WANG, Chuan, Beijing 100085 (CN); SHEN, Xijie, Beijing 100085 (CN); CHENG, Zhaopeng, Beijing 100085 (CN); SUN, Yongjian, Beijing 100085 (CN); LI, Chuangqi, Beijing 100085 (CN); WAN, Jun, Beijing 100085 (CN); RU, Yi, Beijing 100085 (CN); LI, Feng, Beijing 100085 (CN); YAN, Xing, Beijing 100085 (CN); DAI, Qingsong, Beijing 100085 (CN)
(74) Representative: Delumeau, François Guy
(86) International application number: PCT/CN2014/072284
(87) International publication number: WO 2015/027690

(56) References cited:
- CN-A- 101 047 805
- CN-A- 101 141 581
- CN-A- 101 924 891
- CN-A- 103 491 405
- US-A1- 2011 090 402

## Description

### TECHNICAL FIELD

The present disclosure relates to the field of electronic technology, and more particularly, to a remote control system, a remote controller, a display device and a remote control method.

### BACKGROUND

The television is one of the most common electronic devices in human's daily life, and people usually uses a remote controller to control various operations of the television.

The current remote controller contains a power key, digital keys 0∼9, direction keys and several function keys. Generally, a combination of several digital keys is needed when using the digital keys to trigger the television to achieve a certain function. For example, when it is needed to switch to xx satellite channel and it is assumed that the channel number corresponding to the xx satellite channel is 36, a user needs to press the digital key 3 and the digital key 6 on the remote controller, so as to trigger the television to switch to the television program whose channel number is 36.

During the implementation of the present disclosure, the present inventor finds that there are at least the following problems existing in the background art: the input efficiency is very low because there are ten digital keys and generally a combination of several digital keys is needed to achieve an operation. In other words, when using the digital keys, the user must look at the remote controller to input digitals correctly. Even so, once the user forgets a digital instruction or doesn't know the digital instruction, he still needs several attempts to operate correctly. For example, the user wants to switch to xy satellite channel, but he doesn't know the channel number corresponding to the xy satellite channel, then the user still needs several attempts to switch to the xy satellite channel correctly.

Document US2011/090402discloses a system to navigate viewable content of television entertainment.

### SUMMARY

In order to solve the problem of low input efficiency caused by digital keys on the remote controller, the present disclosure discloses a remote control system, a remote controller, a display device and a remote control method. The technical solutions thereof are listed as follows:

According to a first aspect, the invention relates to o a remote control systemcomprising: a remote controller and a display device controlled by the remote controller, the remote controller including direction keys respectively corresponding to different directions and an ok key;
the remote controller is configured to transmit a direction control signal of a corresponding direction to the display device when the direction key is pressed;
the display device is configured to, when receiving a direction control signal of a predetermined direction in a first state of displaying a sub-level content but not displaying a card directory, switch to a second state of displaying the card directory, wherein the card directory includes one selected card and at least one candidate card arranged in order, and contains at least one switch direction;
the display device is configured to, when receiving a direction control signal corresponding to the switch direction in the second state, switch one candidate card in the card directory to be the selected card according to the switch direction;
the remote controller is configured to transmit an ok control signal to the display device when the ok key is pressed; and
the display device is configured to, when receiving the ok control signal in the second state, switch to the first state of displaying a sub-level content corresponding to the selected card but not displaying the card directory.

According to a second aspect, the invention relates to a remote controller comprising: direction keys respectively corresponding to different directions and an ok key, a control chip electrically connected to the direction keys and the ok key respectively, and a transmitter electrically connected to the control chip;
the control chip is configured to control the transmitter to transmit a direction control signal of a corresponding direction to a controlled display device when the direction key is pressed; the direction control signal is configured to, when being received by the display device in a first state of displaying a sub-level content but not displaying a card directory and corresponding to a predetermined direction, trigger the display device to switch to a second state of displaying the card directory, wherein the card directory includes one selected card and at least one candidate card arranged in order, and contains at least one switch direction; the direction control signal is also configured to, when being received by the display device in the second state and corresponding to the switch direction, trigger the display device to switch one candidate card in the card directory to be the selected card according to the switch direction; and
the control chip is also configured to control the transmitter to transmit an ok control signal to the display device when the ok key is pressed; the ok control signal is configured to, when being received by the display device in the second state, switch the display device to the first state of displaying a sub-level content corresponding to the selected card but not displaying the card directory.

In a particular embodiment of the remote controller, the direction control signal is further configure to, when being received by the display device in the second state and not corresponding to the switch direction, trigger the display device to switch to display another card directory, the switch direction or an ordering manner of said another card directory being different from that of the card directory.

In a particular embodiment of the remote controller, the direction control signal is further configured to, when being received by the display device in the first state and not corresponding to the predetermined direction, trigger the display device to directly switch the currently displayed sub-level content to the sub-level content corresponding to another card according to the direction control signal and a predetermined ordering manner among respective cards.

In a particular embodiment of the remote controller, the ok control signal is further configured to, when being received by the display device in the first state, trigger the display device to pause displaying, or trigger the display device to switch to a third state of displaying a sub-level content information list, wherein the sub-level content information list comprises an introduction information of respective sub-level contents which are arranged in order and contain at least one switch direction, and the introduction information comprises at least one of a program number, a channel name and a program name.

In a particular embodiment of the remote controller:
- the direction control signal is further configured to, when being received by the display device in the first state and corresponding to a designated direction, and the currently displayed sub-level content in the first state being a local play content or an online play content, trigger the display device to switch to a fourth state of displaying another sub-level content via a picture-in-picture window on the currently displayed sub-level content;
- the ok control signal is further configured to, when being received by the display device in the fourth state, trigger the display device to switch to a fifth state of displaying said another sub-level content displayed in the picture-in-picture window in full-screen mode.

In a particular embodiment of the remote controller,
- the predetermined direction comprises at least one of a left direction and a right direction, and when the predetermined direction simultaneously comprises the left direction and the right direction, the two directions correspond to card directories of different ordering manners and/or different switch directions, respectively; or
- the predetermined direction comprises at least one of an up direction and a down direction, and when the predetermined direction simultaneously comprises the up direction and the down direction, the two directions correspond to card directories of different ordering manners and/or different switch directions, respectively.

In a particular embodiment of the remote controller:
- the card directory comprises at least one of a lateral card directory, a vertical card directory and an array card directory;
- the lateral card directory comprises one selected card and at least one candidate card arranged in a predetermined ordering manner, and the switch direction of the lateral card directory comprises a left direction and/or a right direction;
- the vertical card directory comprises one selected card and at least one candidate card arranged in a predetermined ordering manner, and the switch direction of the vertical card directory comprises an up direction and/or a down direction; and
- the array card directory comprises one selected card and at least two candidate cards arranged in a predetermined ordering manner, and the switch direction of the array card directory comprises at least two directions perpendicular to each other among the left direction, the right direction, the up direction and the down direction.

In a particular embodiment of the remote controller, the predetermined ordering manner comprises:
an ordering manner according to a time sequence of watching history; or,
an ordering manner according to the number of times of watching history; or,
an ordering manner according to the number of times of being marked; or,
an ordering manner according to program numbers of sub-level content corresponding to respective cards.

According to a third aspect, the invention relates to a display device comprising: a receiver, a control chip electrically connected to the receiver, and a display assembly electrically connected to the control chip;
the receiver is configured to receive a direction control signal or an ok control signal transmitted by a remote controller, wherein the direction control signal is transmitted when a direction key on the remote controller is pressed, and the ok control signal is transmitted when an ok key on the remote controller is pressed;
the control chip is configured to, when the display assembly is in a first state of displaying a sub-level content but not displaying a card directory and the receiver receives the direction control signal corresponding to a predetermined direction, control the display assembly to switch to a second state of displaying the card directory, wherein the card directory includes one selected card and at least one candidate card arranged in order, and contains at least one switch direction;
the control chip is also configured to, when the display assembly is in the second state and the receiver receives the direction control signal corresponding to the switch direction, control the display assembly to switch one candidate card in the card directory to be the selected card according to the switch direction; and
the control chip is also configured to, when the display assembly is in the second state and the receiver receives the ok control signal, control the display assembly to switch to the first state of displaying a sub-level content corresponding to the selected card but not displaying the card directory.

In a particular embodiment of the display device, the control chip is further configured to, when the display assembly is in the second state and the receiver receives the direction control signal not corresponding to the switch direction, control the display assembly to switch to display another card directory, the switch direction or an ordering manner of said another card directory being different from that of the card directory.

In a particular embodiment of the display device, the control chip is configured to, when the display assembly is in the first state and the receiver receives the direction control signal not corresponding to the predetermined direction, control the display assembly to directly switch the currently displayed sub-level content to the sub-level content corresponding to another card according to the direction control signal and a predetermined ordering manner among respective cards.

In a particular embodiment of the display device, the control chip is configured to, when the display assembly is in the first state and the receiver receives the ok control signal, control the display assembly to pause displaying, or control the display assembly to switch to a third state of displaying a sub-level content information list, wherein the sub-level content information list comprises an introduction information of respective sub-level contents which are arranged in order and contain at least one switch direction, and the introduction information comprises at least one of a program number, a channel name and a program name.

In a particular embodiment of the display device,
the control chip is configured to, when the display assembly (660) is in the first state and the receiver receives the direction control signal of a designated direction, and the currently displayed sub-level content in the first state is a local play content or an online play content, control the display assembly to switch to a fourth state of displaying another sub-level content via a picture-in-picture window on the currently displayed sub-level content; and
the control chip is configured to, when the display assembly is in the fourth state and the receiver receives the ok control signal, control the display assembly to switch to a fifth state of displaying said another sub-level content displayed in the picture-in-picture window in full-screen mode.

In a particular embodiment of the display device,
the predetermined direction comprises at least one of a left direction and a right direction, and when the predetermined direction simultaneously comprises the left direction and the right direction, the two directions correspond to card directories of different ordering manners and/or different switch directions, respectively; or
the predetermined direction comprises at least one of an up direction and a down direction, and when the predetermined direction simultaneously comprises the up direction and the down direction, the two directions correspond to card directories of different ordering manners and/or different switch directions, respectively.

In a particular embodiment of the display device,
the card directory comprises at least one of a lateral card directory, a vertical card directory and an array card directory;
the lateral card directory comprises one selected card and at least one candidate card arranged in a predetermined ordering manner, and the switch direction of the lateral card directory comprises a left direction and/or a right direction;
the vertical card directory comprises one selected card and at least one candidate card arranged in a predetermined ordering manner, and the switch direction of the vertical card directory comprises an up direction and/or a down direction; and
the array card directory comprises one selected card and at least two candidate cards arranged in a predetermined ordering manner, and the switch direction of the array card directory comprises at least two directions perpendicular to each other among the left direction, the right direction, the up direction and the down direction.

In a particular embodiment of the display device, the predetermined ordering manner comprises:
an ordering manner according to a time sequence of watching history; or,
an ordering manner according to the number of times of watching history; or,
an ordering manner according to the number of times of being marked; or,
an ordering manner according to program numbers of sub-level content corresponding to respective cards.

According to a fourth aspect, the invention relates to a remote control method comprising:
receiving a direction control signal or an ok control signal transmitted by a remote controller, wherein the direction control signal is transmitted when a direction key on the remote controller is pressed, and the ok control signal is transmitted when an ok key on the remote controller is pressed;
when receiving the direction control signal of a predetermined direction in a first state of displaying a sub-level content but not displaying a card directory, switching to a second state of displaying the card directory, wherein the card directory includes one selected card and at least one candidate card arranged in order, and contains at least one switch direction;
when receiving the direction control signal corresponding to the switch direction in the second state, switching one candidate card in the card directory to be the selected card according to the switch direction; and
when receiving the ok control signal in the second state, switching to the first state of displaying a sub-level content corresponding to the selected card but not displaying the card directory.

In a particular embodiment, the remote control method further comprises, when receiving the direction control signal not corresponding to the switch direction in the second state, switching to display another card directory, the switch direction or an ordering manner of said another card directory being different from that of the card directory.

In a particular embodiment, the remote control method further comprises, when receiving the direction control signal not corresponding to the predetermined direction in the first state, directly switching the currently displayed sub-level content to the sub-level content corresponding to another card according to the direction control signal and a predetermined ordering manner among respective cards.

In a particular embodiment, the remote control method further comprises:
when receiving the ok control signal in the first state, pausing displaying, or switching to a third state of displaying a sub-level content information list, wherein the sub-level content information list comprises an introduction information of respective sub-level contents which are arranged in order and contain at least one switch direction, and the introduction information comprises at least one of a program number, a channel name and a program name.

In a particular embodiment the remote control method further comprises:
when receiving the direction control signal of a designated direction in the first state, and the currently displayed sub-level content in the first state being a local play content or an online play content, switching to a fourth state of displaying another sub-level content via a picture-in-picture window on the currently displayed sub-level content; and

when receiving the ok control signal in the fourth state, switching to a fifth state of displaying said another sub-level content displayed in the picture-in-picture window in full-screen mode.

In a particular embodiment of remote control method:
- the predetermined direction comprises at least one of a left direction and a right direction, and when the predetermined direction simultaneously comprises the left direction and the right direction, the two directions correspond to card directories of different ordering manners and/or different switch directions, respectively; or
- the predetermined direction comprises at least one of an up direction and a down direction, and when the predetermined direction simultaneously comprises the up direction and the down direction, the two directions correspond to card directories of different ordering manners and/or different switch directions, respectively.

In a particular embodiment of the remote control method :
- the card directory comprises at least one of a lateral card directory, a vertical card directory and an array card directory;
- the lateral card directory comprises one selected card and at least one candidate card arranged in a predetermined ordering manner, and the switch direction of the lateral card directory comprises a left direction and/or a right direction;
- the vertical card directory comprises one selected card and at least one candidate card arranged in a predetermined ordering manner, and the switch direction of the vertical card directory comprises an up direction and/or a down direction; and
- the array card directory comprises one selected card and at least two candidate cards arranged in a predetermined ordering manner, and the switch direction of the array card directory comprises at least two directions perpendicular to each other among the left direction, the right direction, the up direction and the down direction.

In a particular embodiment of the remote control method, the predetermined ordering manner comprises:
an ordering manner according to a time sequence of watching history; or,
an ordering manner according to the number of times of watching history; or,
an ordering manner according to the number of times of being marked; or,
an ordering manner according to a program numbers of sub-level content corresponding to respective cards.

In one particular embodiment, the steps of the remote control method are determined by computer program instructions.

Consequently, according to a fifth aspect, the invention is also directed to a computer program for executing the steps of a remote control method when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may bring about the following advantageous effects:

the remote controller controls the display device to switch between the card directory and the sub-level content and switch among different cards in the card directory by means of the direction control signal and the ok control signal, which solves the problem of low input efficiency caused by the digital keys on the remote controller, and achieves the following effects: the operation of switching among different sub-level contents can be achieved only by the direction keys and the ok key on the remote controller without using of the digital keys, thus the input manner is simple and of high efficiency, and during the operation, the user doesn't need to look at the remote controller, nor needs to memorize complex digital instructions in advance.

### BRIEF DESCRIPTION OF THE DRAWINGS

In order to explain the technical solutions in the embodiments of the present disclosure more clearly, a simple introduction to the drawings required for describing the embodiments will be given below. Obviously, the drawings described below only illustrate some embodiments of the present disclosure, and for those skilled in the art, other drawings may be obtained based on these drawings without inventive labor.

The drawings herein are incorporated into the specification and constitute a part of the specification, illustrate embodiments in accordance with the present invention, and serve to explain the principle of the present invention together with the specification.
Fig. 1 is a structure diagram showing a remote control system in accordance with an exemplary embodiment;
Fig. 2A illustrates an interface diagram when a display device of the remote control system is in a first state in accordance with an exemplary embodiment;
Fig. 2B is an interface diagram showing the remote control system in accordance with an exemplary embodiment, in which the display device is in a second state displaying a lateral card directory;
Fig. 2C is an interface diagram showing the remote control system in accordance with an exemplary embodiment, in which the display device is in the second state displaying a vertical card directory;
Fig. 2D is an interface diagram showing the remote control system in accordance with an exemplary embodiment, in which the display device is in the second state displaying an array card directory;
Fig. 3 is a structure diagram showing a remote control system in accordance with an exemplary embodiment;
Fig. 4A to Fig. 4J are interface diagrams showing different display states of a display device provided by the embodiment shown in Fig. 3;
Fig. 5 is a structure diagram showing a remote controller in accordance with an exemplary embodiment;
Fig. 6 is a structure diagram showing a display device in accordance with an exemplary embodiment;
Fig. 7 is a method flowchart showing a remote control method in accordance with an exemplary embodiment; and
Fig. 8 is a method flowchart showing a remote control method in accordance with an exemplary embodiment.

### DETAILED DESCRIPTION

In order to make purposes, technical solutions and advantages of the present disclosure more apparent, hereinafter, the embodiments of the present disclosure will be further described in detail in conjunction with the drawings.

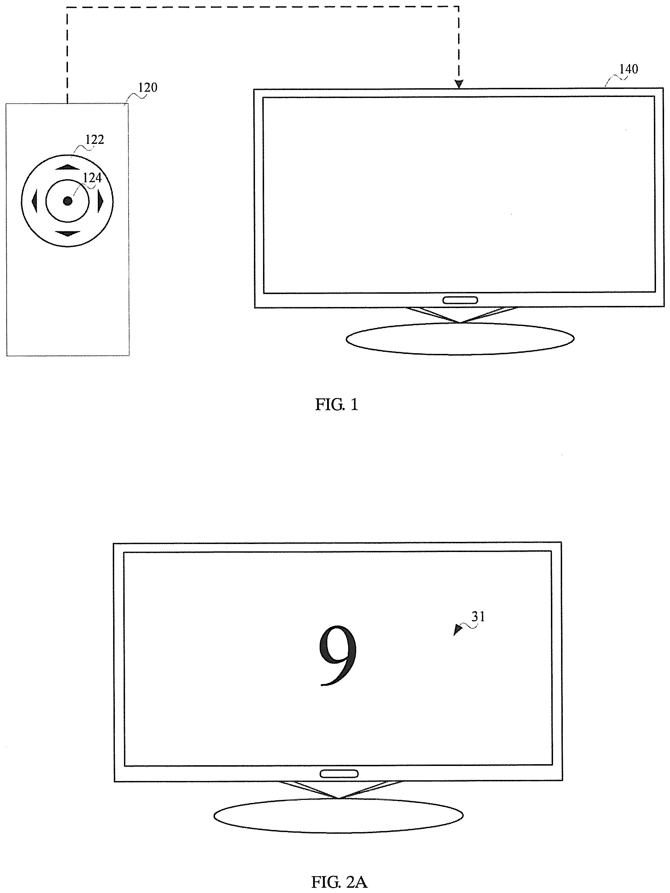

Referring to Fig. 1, which illustrates a structure diagram of a remote control system provided by an embodiment of the present disclosure, the remote control system includes a remote controller 120 and a display device 140 controlled by the remote controller 120. The remote controller 120 includes direction keys 122 respectively corresponding to different directions and an ok key 124.

When a direction key 122 is pressed, the remote controller 120 transmits a direction control signal of a corresponding direction to the display device 140.

When receiving a direction control signal of a predetermined direction in a first state of displaying a sub-level content but not displaying a card directory, the display device 140 switches to a second state of displaying the card directory. The card directory includes one selected card and at least one candidate card arranged in order, and contains at least one switch direction.

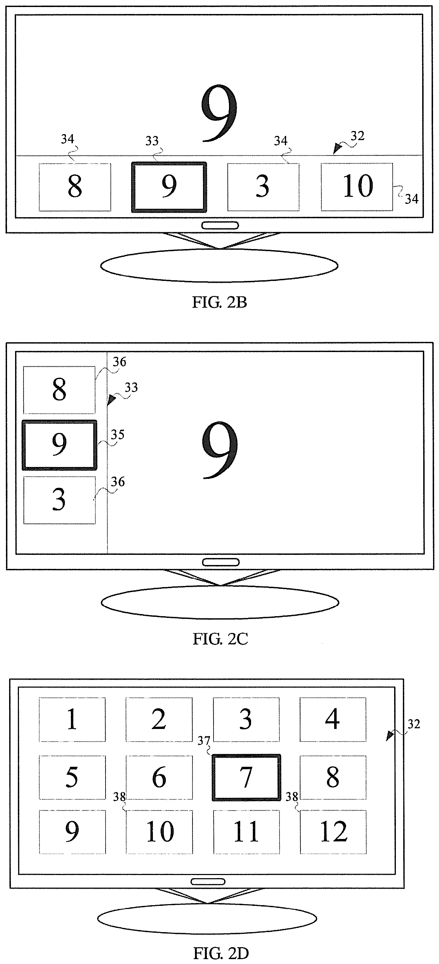

The first state may be shown as in Fig. 2A, and the second state may be shown as in Fig. 2B, Fig. 2C, or Fig. 2D.

When receiving a direction control signal corresponding to the switch direction in the second state, the display device 140 switches one candidate card in the card directory to be the selected card according to the switch direction.

The remote controller 120 transmits an ok control signal to the display device when the ok key 124 is pressed.

When receiving an ok control signal in the second state, the display device 140 switches to the first state of displaying the sub-level content corresponding to the selected card but not displaying the card directory.

In conclusion, in the remote control system provided by the embodiments of the present disclosure, the remote controller controls the display device to switch between the card directory and the sub-level content and switch among different cards in the card directory by means of the direction control signal and the ok control signal, which solves the problem of low input efficiency caused by the digital keys on the remote controller, and achieves the following effects: the operation of switching among different sub-level contents can be achieved only by the direction keys and the ok key on the remote controller without using of the digital keys, thus the input manner is simple and of high efficiency, and during the operation, the user doesn't need to look at the remote controller, nor needs to memorize complex digital instructions in advance.

It should be noted that, the remote controller described herein must include direction keys and ok key, and generally doesn't include digital keys; the remote controller may also include digital keys, which are not used as routine operation keys, but are only used for inputting digitals in an input box; all of the embodiments may be implemented on the conventional remote controller. However, when only including direction keys and ok key, the remote controller may be made smaller, lighter and thinner, so as to achieve effects of reducing weight and saving cost.

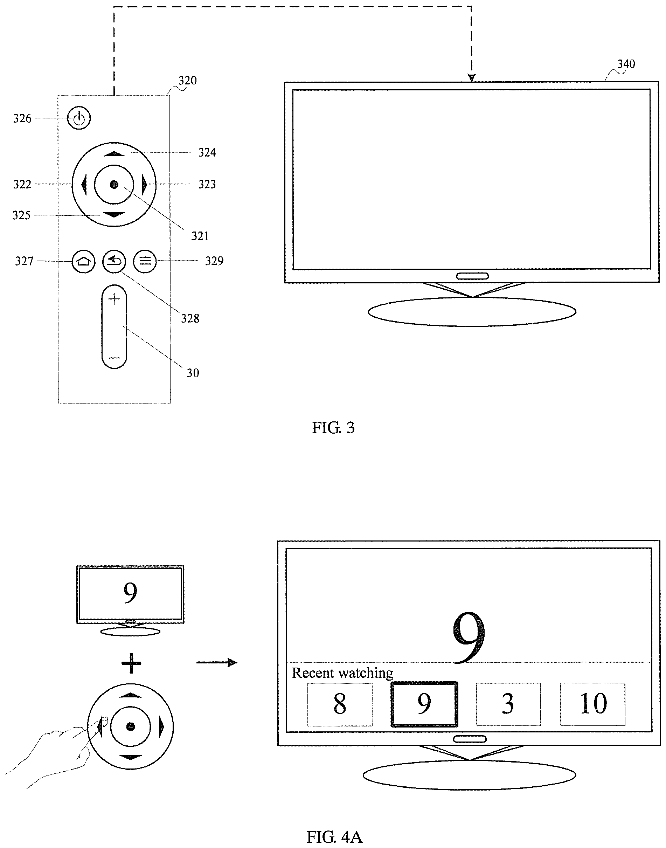

Referring to Fig. 3, which illustrates a structure diagram of a remote control system provided by another embodiment of the present disclosure, the present embodiment is exemplified by taking a remote controller not including digital keys and a display device which is a smart TV as an example. The remote control system includes a remote controller 320 and a display device 340 controlled by the remote controller 320.

The remote controller 320 includes direction keys respectively corresponding to different directions and an ok key 321. The direction keys include a left direction key 322, a right direction key 323, an up direction key 324 and a down direction key 325. These four direction keys may be distributed on a surface of the remote controller 320 in a continuous annular shape, and the ok key 321 is positioned at the center of these four direction keys. In different embodiments, the number of the direction keys may be different, for example, the number of the direction keys may be 2 or 8, etc. The remote controller 320 may optionally include one or more of a power key 326 (to control the display device 340 to power on), a home key 327 (to control the display device 340 to display a desktop), a return key 328 (to control the display device 340 to return to a previous operation), a menu key 329 (to control the display device to display a menu), and a volume key 30.

In the embodiment of the present disclosure, in the case that there is no power key and/or home key on the surface of the provided remote controller, the power on of the display device 340 may be accomplished by long pressing the ok key 321 in the remote controller, switching the display device 340 to display the desktop may be accomplished by double clicking the ok key, and so on. In the case that the menu key or the power key is omitted in the remote controller, the present technical solution may achieve functions of the menu key or the power key by combining the direction keys, long pressing the ok key, or repeatedly clicking the ok key, etc., which is not limited by the solution of this example.

The display device 340 is a smart TV which communicates with the remote controller 320 through wireless communication technology. The wireless communication technology includes but is not limited to: infrared, Bluetooth, WiFi (Wireless Fidelity) network, or ZigBee (wireless networking communication technology). In other embodiments, the display device 340 may be a desktop computer, a notebook computer, a tablet computer, or an all-in-one machine, etc.

### Among them:

The remote controller 320 transmits a direction control signal of a corresponding direction to the display device 340 when a direction key is pressed. That is, when the left direction key 322 is pressed, the remote controller 320 transmits a direction control signal of a left direction to the display device 340; when the right direction key 323 is pressed, the remote controller 320 transmits a direction control signal of a right direction to the display device 340; when the up direction key 324 is pressed, the remote controller 320 transmits a direction control signal of an up direction to the display device 340; and when the down direction key 325 is pressed, the remote controller 320 transmits a direction control signal of a down direction to the display device 340.

When receiving a direction control signal of a predetermined direction in a first state of displaying a sub-level content but not displaying a card directory, the display device 340 switches to a second state of displaying the card directory. The card directory includes one selected card and at least one candidate card arranged in order, and contains at least one switch direction.

The first state may be shown as in Fig. 2A. In the first state, the display device 140 displays a sub-level content 31 but doesn't display a card directory. The sub-level content may be a particular TV channel 9, a local high definition play resource, an interface of an application store, or an interface of a game center, etc.

The second state may be shown as in Fig. 2B, Fig. 2C, or Fig. 2D. In the second state, the display device 140 displays a card directory 32, and the card directory may be any one of a lateral card directory shown in Fig. 2B, a vertical card directory shown in Fig. 2C, and an array card directory shown in Fig. 2D. Generally, the display device 140 directly displays a card directory after it is powered on; and during the operation of the display device 140, if it is needed to display a card directory, the card directory is generally displayed by being superimposed on the currently displayed sub-level content.

The lateral card directory includes one selected card 33 and at least one candidate card 34 arranged in a predetermined ordering manner, and the switch direction of the lateral card directory includes a left direction and/or a right direction. As shown in Fig. 2B, the switch direction simultaneously includes the left direction and the right direction.

The vertical card directory includes one selected card 35 and at least one candidate card 36 arranged in a predetermined ordering manner, and the switch direction of the vertical card directory includes an up direction and/or a down direction. As shown in Fig. 2C, the switch direction simultaneously includes the up direction and the down direction.

The array card directory includes one selected card 37 and at least two candidate cards 38 arranged in a predetermined ordering manner, and the switch direction of the array card directory includes at least two directions perpendicular to each other among the left direction, the right direction, the up direction and the down direction. As shown in Fig. 2D, the switch direction simultaneously includes the left direction, the right direction, the up direction and the down direction.

Each card occupies a part of an area of the display interface; each card may be rectangular, circular, square, round-corner rectangular, or other geometric shapes; and each card corresponds to one sub-level content, for example, each TV channel is one sub-level content and corresponds to one card. For another example, each hardware interface on the television corresponds to one card, and the sub-level content of each card is the local high definition play resource provided through the hardware interface. The content displayed on each card may include introduction information of the sub-level content, a program number, a channel name, and a program name, and the introduction information may be a poster picture and/or literal description.

Different card directories of the same type may include different predetermined ordering manners, which include:
an ordering manner according to a time sequence of watching history, i.e., so-called "recent watching"; for example, according to recent watching time, ordering from left to right in the card directory based on time from recent to far; or,
an ordering manner according to the number of times of watching history, i.e., so-called "frequent watching"; for example, according to the number of times of history watching, ordering from left to right in the card directory based on the number of times from more to less; or,
an ordering manner according to the number of times of being marked, i.e., so-called "my favorites"; for example, according to the number of times of being marked with "favorite" ordering from left to right in the card directory based on the number of times from more to less; or,
an ordering manner according to the program numbers of the sub-level contents corresponding to each card, i.e., so-called "TV Wall"; for example, according to the program numbers, ordering from left to right in the card directory based on the program numbers from small to big. In this example, TV Wall is a display mode for previewing live broadcasting contents of a plurality of channels. In the display mode of TV Wall, a display area of the TV screen is divided into a plurality of rectangular display subareas each having a predetermined size, the display subareas are used to respectively display the preview contents corresponding to the searched different channels, and the preview contents may be a live broadcasting video of a channel or a screenshot thereof.

The aforesaid direction control signal of the predetermined direction may be a direction control signal of left direction, and the card directory to be displayed correspondingly may be a lateral card directory. For example, in the case that the display device 340 is in a first state of displaying a sub-level content "TV channel 9" but not displaying a card directory, when receiving a direction control signal of left direction, the display device 340 is switched to a second state of displaying a lateral card directory. The lateral card directory may be ordered according to the time sequence of watching history, as shown in Fig. 4A.

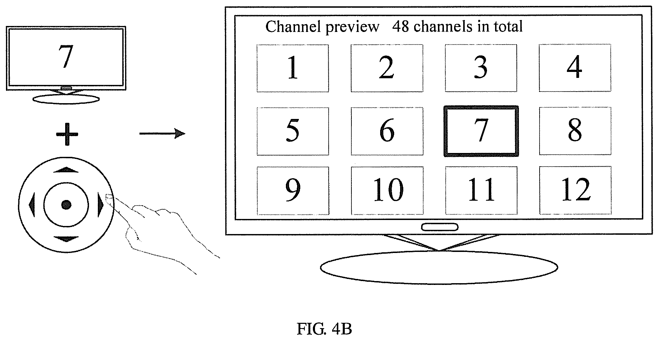

The aforesaid direction control signal of the predetermined direction also may be a direction control signal of right direction, and the card directory to be displayed correspondingly may be an array card directory. For example, in the case that the display device 340 is in a first state of displaying a sub-level content "TV channel 7" but not displaying a card directory, when receiving a direction control signal of right direction, the display device 340 is switched to a second state of displaying an array card directory. The array card directory may be ordered according to the program numbers, as shown in Fig. 4B.

It should be additionally noted that, the present embodiment is described only by taking the following condition as an example: the predetermined direction includes at least one of the left direction and the right direction, and when the predetermined direction simultaneously includes the left direction and the right direction, the two directions respectively correspond to card directories of different ordering manners and/or different switch directions. In other embodiments, the predetermined direction may include at least one of the up direction and the down direction, and when the predetermined direction simultaneously includes the up direction and the down direction, the two directions respectively correspond to card directories of different ordering manners and/or different switch directions. Besides, in the card directory, the initially selected card may be a predetermined card, or may be a card corresponding to the currently displayed sub-level content.

Also, when receiving a direction control signal corresponding to a switch direction in the second state, the display device 340 switches one candidate card in the card directory to be the selected card according to the switch direction.

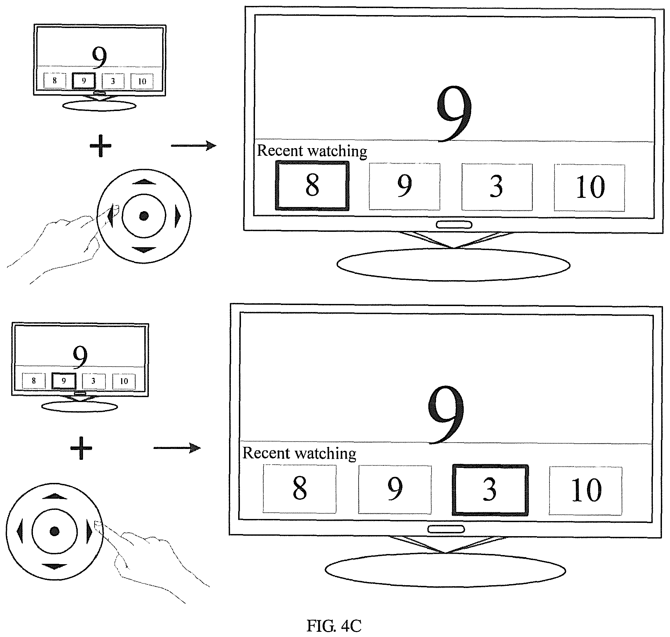

For example, if the card directory is the lateral card directory as shown in Fig. 4A, and the switch direction includes both the left direction and the right direction, then the display device 340 switches a candidate card "8" which is located to the left of the currently selected card, to be the selected card according to the switch direction when receiving a direction control signal corresponding to left direction, and switches the currently selected card "9" to be a candidate card; alternatively, the display device 340 switches a candidate card "3" which is located to the right of the currently selected card, to be the selected card according to the switch direction when receiving a direction control signal corresponding to right direction, and switches the currently selected card "9" to be a candidate card, as shown in Fig. 4C.

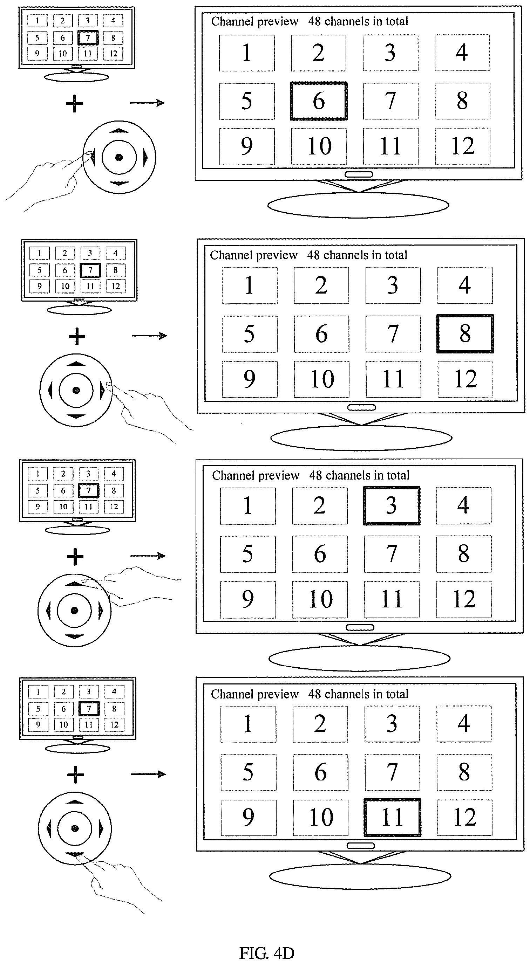

For another example, if the card directory is an array card directory as shown in Fig. 4A, and the switch direction includes four directions of up, down, left and right, then the display device 340 switches a candidate card "3" which is located above the currently selected card, to be the selected card according to the switch direction when receiving a direction control signal corresponding to the up direction, and switches the currently selected card "7" to be a candidate card; alternatively, the display device 340 switches a candidate card "11", which is located beneath the currently selected card, to be the selected card according to the switch direction when receiving a direction control signal corresponding to the down direction, and switches the currently selected card "7" to be a candidate card; alternatively, the display device 340 switches a candidate card "6", which is located to the left of the currently selected card, to be the selected card according to the switch direction when receiving a direction control signal corresponding to left direction, and switches the currently selected card "7" to be a candidate card; alternatively, the display device 340 switches a candidate card "8", which is located to the right of the currently selected card, to be the selected card according to the switch direction when receiving a direction control signal corresponding to right direction, and switches the currently selected card "7" to be a candidate card, as shown in Fig. 4D.

The remote controller 320 transmits an ok control signal to the display device 340 when the ok key 321 is pressed.

When receiving an ok control signal in the second state, the display device 340 switches to the first state of displaying a sub-level content corresponding to the selected card but not displaying the card directory.

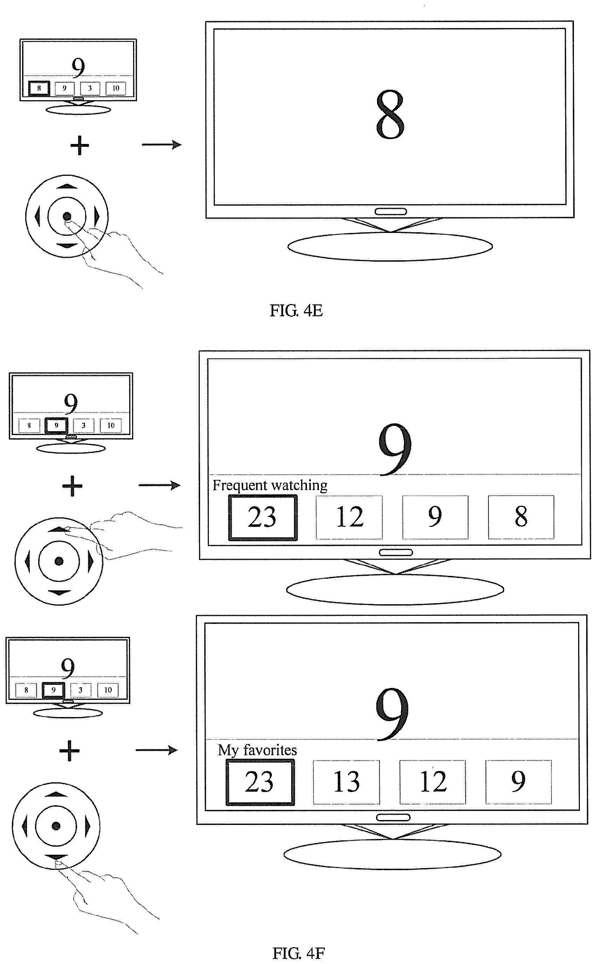

For example, if the display device 340 is in the second state as shown in the upper figure of Fig. 4C, then the display device 340 switches to the first state of displaying a sub-level content corresponding to the selected card "8" but not displaying the card directory when receiving the ok control signal, as shown in Fig. 4E.

The user may perform switching among different channels conveniently by the above procedure.

Also, when receiving a direction control signal not corresponding to the switch direction in the second state, the display device 340 switches to display another card directory, the switch direction or ordering manner of said another card directory being different from that of the current card directory.

For example, if the display device 340 is displaying a lateral card directory as shown in Fig. 4A, when the display device 340 receives a direction control signal of up direction, since the up direction doesn't correspond to the switch direction of the lateral card directory, the display device 340 switches to display another card directory which may be a lateral card directory having an ordering manner ordered according to the number of times of watching history; alternatively, if the display device 340 receives a direction control signal of down direction, since the down direction doesn't correspond to the switch direction of the lateral card directory, the display device 340 switches to display another card directory which may be a lateral card directory having an ordering manner ordered according to the number of times of being marked, as shown in Fig. 4F.

It can be known in conjunction with Fig. 4F that, if the user successively presses the up direction key or the down direction key for several times, the card directory displayed by the display device 340 may be circularly switched among the lateral card directory of "recent watching", the lateral card directory of "frequent watching", and the lateral card directory of "my favorites".

Also, When receiving a direction control signal not corresponding to a predetermined direction in the first state, the display device 340 directly switches the currently displayed sub-level content to the sub-level content corresponding to another card according to the direction control signal and a predetermined ordering manner among respective cards.

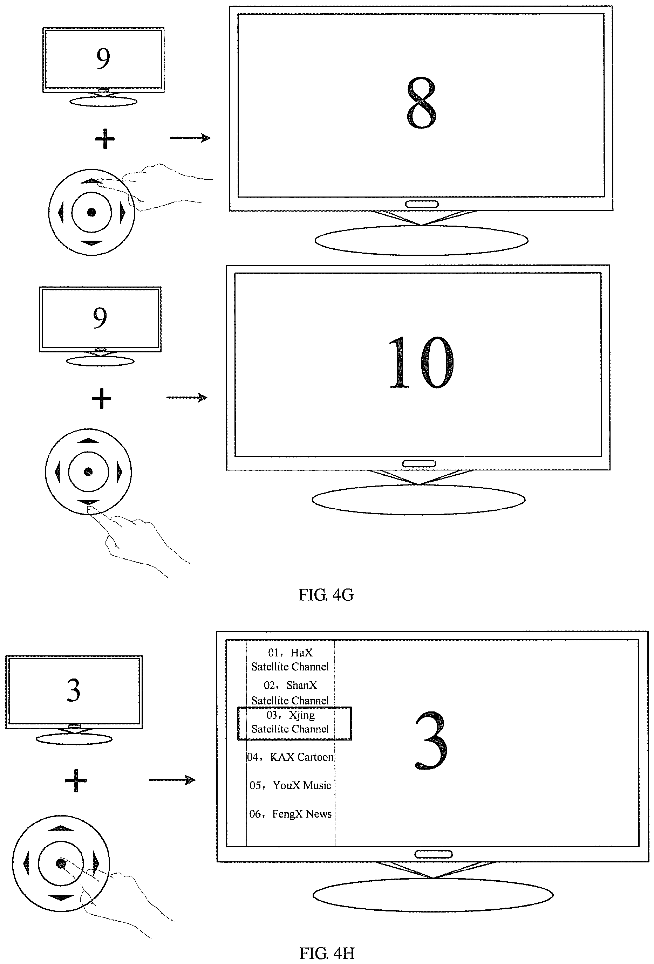

For example, if the display device 340 is in a first state as shown in Fig. 2A, when the display device 340 receives a direction control signal of up direction, since the up direction doesn't correspond to the predetermined direction (left direction and right direction), the display device 340 directly switches the currently displayed sub-level content "9" to the sub-level content "8" corresponding to another card according to the direction control signal and a predetermined ordering manner among respective cards, wherein the predetermined ordering manner may be an ordering manner according to the program numbers of the sub-level contents corresponding to respective cards; alternatively, when the display device 340 receives a direction control signal of down direction, since the down direction doesn't correspond to the predetermined direction (left direction and right direction), the display device 340 directly switches the currently displayed sub-level content "9" to the sub-level content "10" corresponding to another card according to the direction control signal and a predetermined ordering manner among respective cards, wherein the predetermined ordering manner may be an ordering manner according to the program numbers of sub-level content corresponding to respective cards, as shown in Fig. 4G.

Also, When receiving an ok control signal in the first state, the display device 340 pauses displaying, or switches to a third state of displaying sub-level content information list, wherein the sub-level content information list includes introduction information of respective sub-level contents which are arranged in order and contain at least one switch direction, and the introduction information includes at least one of program number, channel name and program name.

For example, if the display device 340 is in the first state as shown in Fig. 2A, and the sub-level content may be paused (e.g., the sub-level content is a local high definition play resource), then the display device 340 pauses displaying when receiving an ok control signal; for another example, if the display device 340 is in the first state, and the sub-level content is a content that cannot be paused (e.g., a live broadcasting TV program), then the display device 340 switches to the third state of displaying sub-level content information list when receiving an ok control signal, as shown in Fig. 4H. The sub-level content information list includes introduction information of respective sub-level contents which are arranged in order and contain at least one switch direction, and the introduction information includes program numbers and channel names. The difference between the sub-level content information list and the card directory lies in: the sub-level content information list is presented in form of "list & text" while the card directory is generally presented in form of "picture & text".

When the display device 340 is in the first state and receives a direction control signal of a designated direction, and the currently displayed sub-level content in the first state is a local play content or an online play content, the display device 340 switches to a fourth state of displaying another sub-level content via a picture-in-picture window on the currently displayed sub-level content.

The designated direction may be the same as or different from the aforesaid predetermined direction. The local play content may be the play contents provided through hardware interfaces by a high definition player, a set top box, a jukebox or a game machine connected to the television. The online play content may be provided through network by home computer or remote server connected to the television.

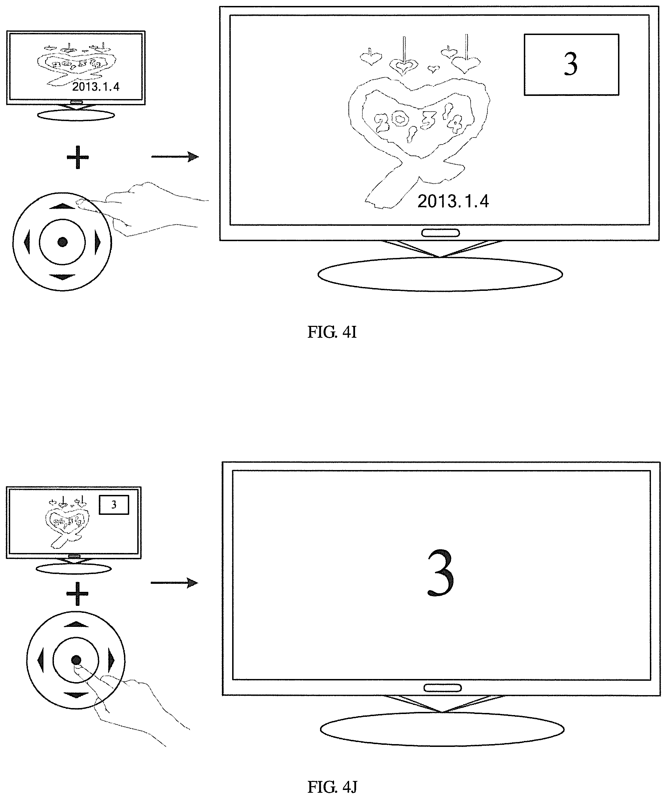

For example, when the display device 340 is in the first state and receives a direction control signal of up direction, and the currently displayed sub-level content of the display device 340 in the first state is a local play content or an online play content, the display device 340 switches to a fourth state of displaying another sub-level content 39 via a picture-in-picture window on the currently displayed sub-level content, wherein said another sub-level content 39 may be TV channel "9" recently watched, as shown in Fig. 4I.

When the display device 340 is in the fourth state and receives an ok control signal, the display device 340 switches to a fifth state of displaying another sub-level content displayed in the picture-in-picture window in full-screen mode.

For example, when the display device 340 is in the fourth state as shown in Fig. 4I and receives an ok control signal, the display device 340 switches to a fifth state of displaying another sub-level content "9" displayed in the picture-in-picture window in full-screen mode, as shown in Fig. 4J. In the fifth state, the sub-level content displayed in the fourth state may be paused and switched to backstage, may be shut down, or may be switched to the picture-in-picture window, as shown in Fig. 4J.

Also, when the display device 340 is in the first state and receives a direction control signal not corresponding to the designated direction, and the currently displayed sub-level content in the first state is a local play content or an online play content, the display device 340 performs a fast forward or fast backward operation on the local play content or online play content.

For example, when the display device 340 is in the first state and receives a direction control signal of left direction, and the currently displayed sub-level content of the display device 340 in the first state is a local play content or an online play content, the display device 340 performs a fast backward operation on the local play content or online play content. On the contrary, if the display device 340 receives a direction control signal of right direction, the display device 340 performs a fast forward operation on the local play content or online play content.

Also, when the display device 340 is in the fourth state and receives a direction control signal of a particular direction, the display device 340 switches said another sub-level content displayed in the picture-in-picture window to yet another sub-level content.

For example, when the display device 340 is in the fourth state and receives a direction control signal of up direction, the display device 340 switches said another sub-level content "9" displayed in the picture-in-picture window to yet another sub-level content "8"; alternatively, when the display device 340 is in the fourth state and receives a direction control signal of down direction, the display device 340 switches said another sub-level content "9" displayed in the picture-in-picture window to yet another sub-level content "10".

In conclusion, in the remote control system provided by the embodiments of the present disclosure, the remote controller controls the display device to switch between the card directory and the sub-level content and switch among different cards in the card directory by means of the direction control signal and the ok control signal, which solves the problem of low input efficiency caused by the digital keys on the remote controller, and achieves the following effects: the operation of switching among different sub-level contents can be achieved only by the direction keys and the ok key on the remote controller without using of the digital keys, thus the input manner is simple and of high efficiency, and during the operation, the user doesn't need to look at the remote controller, nor needs to memorize complex digital instructions in advance.

When the display device is in the second state and receives a direction control signal not corresponding to the switch direction, the display device switches to display another card directory, thereby achieving the following effects: switching to a different card directory can be achieved just by clicking the direction key on the remote controller, and during the operation, the user doesn't need to look at the remote controller, nor needs to memorize complex digital instructions in advance.

When the display device is in the first state and receives a direction control signal not corresponding to a predetermined direction, the display device directly switches the currently displayed sub-level content to the sub-level content corresponding to another card according to the direction control signal and a predetermined ordering manner among respective cards, thereby achieving the following effects: quickly switching to another sub-level content can be achieved just by clicking once the direction key on the remote controller.

When the display device is in the first state and receives an ok control signal, the display device switches to the third state of displaying a sub-level content information list, thereby achieving the following effects: the sub-level content information list can be popped up quickly just by clicking the ok key on the remote controller.

Also, when the display device is in the first state and receives a direction control signal of a designated direction, and the currently displayed sub-level content in the first state is a local play content or an online play content, the display device switches to a fourth state of displaying another sub-level content via a picture-in-picture window on the currently displayed sub-level content; and when the display device is in the fourth state and receives an ok control signal, the display device switches to a fifth state of displaying another sub-level content displayed in the picture-in-picture window in full-screen mode, thereby achieving the following effects: when watching a local play content or an online play content, the user may check TV programs on-playing by the picture-in-picture function, so as to freely switch between two sub-level contents.

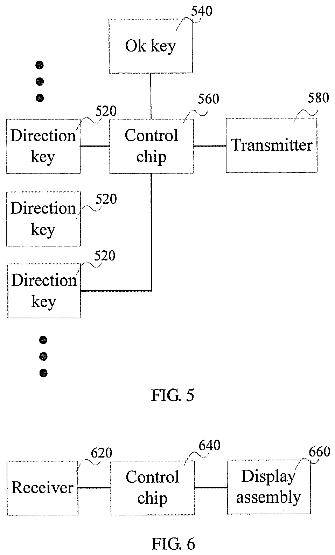

Referring to Fig. 5, which illustrates a structure diagram of a remote controller provided by an embodiment of the present disclosure, the remote controller includes: direction keys 520 respectively corresponding to different directions and an ok key 540, a control chip 560 electrically connected to the direction keys 520 and the ok key 540 respectively, and a transmitter 580 electrically connected to the control chip 560.

The control chip 560 controls the transmitter 580 to transmit a direction control signal of a corresponding direction to a controlled display device when the direction key 520 is pressed.

When the direction control signal is received by the display device in a first state of displaying a sub-level content but not displaying a card directory and the direction control signal corresponds to a predetermined direction, the direction control signal is used to trigger the display device to switch to a second state of displaying the card directory. The card directory includes one selected card and at least one candidate card arranged in order, and contains at least one switch direction.

Also, when the direction control signal is received by the display device in the second state and corresponds to the switch direction, the direction control signal is also used to trigger the display device to switch one candidate card in the card directory to be the selected card according to the switch direction.

Also, the control chip 560 controls the transmitter to transmit an ok control signal to the display device when the ok key is pressed; and when the ok control signal is received by the display device in the second state, the ok control signal is used to switch the display device to the first state of displaying a sub-level content corresponding to the selected card but not displaying the card directory.

In conclusion, the remote controller provided by the embodiments of the present disclosure controls the display device to switch between the card directory and the sub-level content and switch among different cards in the card directory by means of the direction control signal and the ok control signal, which solves the problem of low input efficiency caused by the digital keys on the remote controller, and achieves the following effects: the operation of switching among different sub-level contents can be achieved only by the direction keys and the ok key on the remote controller without using of the digital keys, thus the input manner is simple and of high efficiency, and during the operation, the user doesn't need to look at the remote controller, nor needs to memorize complex digital instructions in advance.

In a preferable embodiment based on the embodiment shown in Fig. 5, when the direction control signal is received by the display device in the second state and doesn't correspond to the switch direction, the direction control signal is also used to trigger the display device to switch to display another card directory, the switch direction or ordering manner of said another card directory being different from that of the current card directory.

In a preferable embodiment based on the embodiment shown in Fig. 5, when the direction control signal is received by the display device in the first state and doesn't corresponds to the predetermined direction, the direction control signal is also used to trigger the display device to directly switch the currently displayed sub-level content to the sub-level content corresponding to another card according to the direction control signal and a predetermined ordering manner among respective cards.

In a preferable embodiment based on the embodiment shown in Fig. 5, when the ok control signal is received by the display device in the first state, the ok control signal is also used to trigger the display device to pause displaying, or trigger the display device to switch to a third state of displaying a sub-level content information list, wherein the sub-level content information list includes introduction information of respective sub-level contents which are arranged in order and contain at least one switch direction, and the introduction information includes at least one of program numbers, channel names and program names.

In a preferable embodiment based on the embodiment shown in Fig. 5, when the direction control signal is received by the display device in the first state and corresponds to a designated direction, and the currently displayed sub-level content in the first state is a local play content or an online play content, the direction control signal is also used to trigger the display device to switch to a fourth state of displaying another sub-level content via a picture-in-picture window on the currently displayed sub-level content.

When the ok control signal is received by the display device in the fourth state, the ok control signal is also used to trigger the display device to switch to a fifth state of displaying said another sub-level content displayed in the picture-in-picture window in full-screen mode.

In a preferable embodiment based on the embodiment shown in Fig. 5, the predetermined direction includes at least one of the left direction and the right direction, and when it simultaneously includes the left direction and the right direction, the two directions correspond to card directories of different ordering manners and/or different switch directions, respectively; alternatively, the predetermined direction includes at least one of the up direction and the down direction, and when it simultaneously includes the up direction and the down direction, the two directions correspond to card directories of different ordering manners and/or different switch directions, respectively.

In a preferable embodiment based on the embodiment shown in Fig. 5, the card directory includes at least one of a lateral card directory, a vertical card directory and an array card directory.

The lateral card directory includes one selected card and at least one candidate card arranged in a predetermined ordering manner, and the switch direction of the lateral card directory includes a left direction and/or a right direction.

The vertical card directory includes one selected card and at least one candidate card arranged in a predetermined ordering manner, and the switch direction of the vertical card directory includes an up direction and/or a down direction.

The array card directory includes one selected card and at least two candidate cards arranged in a predetermined ordering manner, and the switch direction of the array card directory includes at least two directions perpendicular to each other among a left direction, a right direction, an up direction and a down direction.

In a preferable embodiment based on the embodiment shown in Fig. 5, the predetermined ordering manner includes:
an ordering manner according to a time sequence of watching history; or,
an ordering manner according to the number of times of watching history; or,
an ordering manner according to the number of times of being marked; or,
an ordering manner according to program numbers of sub-level content corresponding to each card.

In conclusion, in these preferred embodiments, when receiving a direction control signal not corresponding to the switch direction in the second state, another card directory is switched to display, thereby achieving the following effects: switching to a different card directory can be achieved just by clicking the direction key on the remote controller, and during the operation, the user doesn't need to look at the remote controller, nor needs to memorize complex digital instructions in advance.

When receiving a direction control signal not corresponding to a predetermined direction in the first state, the currently displayed sub-level content is switched to be the sub-level content corresponding to another card according to the direction control signal and a predetermined ordering manner among respective cards, thereby achieving the following effects: quickly switching to another sub-level content can be achieved just by clicking once the direction key on the remote controller.

When receiving an ok control signal in the first state, a third state of displaying sub-level content information list is switched to, thereby achieving the following effects: the sub-level content information list can be popped up quickly just by clicking the ok key on the remote controller.

When receiving a direction control signal of a designated direction in the first state, and the currently displayed sub-level content in the first state is a local play content or an online play content, a fourth state of displaying another sub-level content via a picture-in-picture window on the currently displayed sub-level content is switched to; when receiving an ok control signal in the fourth state, a fifth state of displaying another sub-level content displayed in the picture-in-picture window in full-screen mode is switched to, thereby achieving the following effects: when watching a local play content or an online play content, the user may check TV programs on-playing by the picture-in-picture function, so as to freely switch between two sub-level contents.

Referring to Fig. 6, which illustrates a structure diagram of a display device provided by an embodiment of the present disclosure, the display device includes: a receiver 620, a control chip 640 electrically connected to the receiver 620, and a display assembly 660 electrically connected to the control chip 640.

The receiver 620 receives a direction control signal or an ok control signal transmitted by a remote controller; the direction control signal is transmitted when a direction key on the remote controller is pressed, and the ok control signal is transmitted when an ok key on the remote controller is pressed.

When the display assembly 660 is in a first state of displaying a sub-level content but not displaying a card directory and the receiver 620 receives the direction control signal corresponding to a predetermined direction, the control chip 640 controls the display assembly 660 to switch to a second state of displaying the card directory. The card directory includes one selected card and at least one candidate card arranged in order, and contains at least one switch direction.

Also, when the display assembly 660 is in the second state and the receiver 620 receives the direction control signal corresponding to the switch direction, the control chip 640 controls the display assembly 660 to switch one candidate card in the card directory to be the selected card according to the switch direction.

Also, when the display assembly 660 is in the second state and the receiver 620 receives the ok control signal, the control chip 640 controls the display assembly 660 to switch to the first state of displaying the sub-level content corresponding to the selected card but not displaying the card directory.

In conclusion, the display device provided by the embodiments of the present disclosure controls the display device to switch between the card directory and the sub-level content and switch among different cards in the card directory by receiving the direction control signal and the ok control signal transmitted by the remote controller, which solves the problem of low input efficiency caused by the digital keys on the remote controller, and achieves the following effects: the operation of switching among different sub-level contents can be achieved only by the direction keys and the ok key on the remote controller but without using of the digital keys, thus the input manner is simple and of high efficiency, and during the operation, the user doesn't need to look at the remote controller, nor needs to memorize complex digital instructions in advance.

In a preferable embodiment based on the embodiment shown in Fig. 6, when the display assembly 660 is in the second state and the receiver 620 receives the direction control signal not corresponding to the switch direction, the control chip 640 also controls the display assembly 660 to switch to display another card directory, the switch direction or ordering manner of said another card directory being different from that of the current card directory.

In a preferable embodiment based on the embodiment shown in Fig. 6, when the display assembly 660 is in the first state and the receiver 620 receives the direction control signal not corresponding to the predetermined direction, the control chip 640 also controls the display assembly 660 to directly switch the currently displayed sub-level content to the sub-level content corresponding to another card according to the direction control signal and a predetermined ordering manner among respective cards.

In a preferable embodiment based on the embodiment shown in Fig. 6, when the display assembly 660 is in the first state and the receiver 620 receives the ok control signal, the control chip 640 also controls the display assembly 660 to pause displaying, or control the display assembly 660 to switch to a third state of displaying sub-level content information list, wherein the sub-level content information list includes introduction information of respective sub-level contents which are arranged in order and contain at least one switch direction, and the introduction information includes at least one of program numbers, channel names and program names.

In a preferable embodiment based on the embodiment shown in Fig. 6, when the display assembly 660 is in the first state, the receiver 620 receives the direction control signal of a designated direction, and the currently displayed sub-level content in the first state is a local play content or an online play content, the control chip 640 also controls the display assembly 660 to switch to a fourth state of displaying another sub-level content via a picture-in-picture window on the currently displayed sub-level content.

When the display assembly 660 is in the fourth state and the receiver 620 receives the ok control signal, the control chip 640 also controls the display assembly 660 to switch to a fifth state of displaying said another sub-level content displayed in the picture-in-picture window in full-screen mode.

In a preferable embodiment based on the embodiment shown in Fig. 6, the predetermined direction includes at least one of a left direction and a right direction, and when it simultaneously includes the left direction and the right direction, the two directions correspond to card directories of different ordering manners and/or different switch directions, respectively; alternatively, the predetermined direction includes at least one of an up direction and a down direction, and when it simultaneously includes the up direction and the down direction, the two directions correspond to card directories of different ordering manners and/or different switch directions, respectively.

In a preferable embodiment based on the embodiment shown in Fig. 6, the card directory includes at least one of a lateral card directory, a vertical card directory and an array card directory.

The lateral card directory includes one selected card and at least one candidate card arranged in a predetermined ordering manner, and the switch direction of the lateral card directory includes a left direction and/or a right direction.

The vertical card directory includes one selected card and at least one candidate card arranged in a predetermined ordering manner, and the switch direction of the vertical card directory includes an up direction and/or a down direction.

The array card directory includes one selected card and at least two candidate cards arranged in a predetermined ordering manner, and the switch direction of the array card directory includes at least two directions perpendicular to each other among a left direction, a right direction, an up direction and a down direction.

In a preferable embodiment based on the embodiment shown in Fig. 6, the predetermined ordering manner includes:
an ordering manner according to time sequence of watching history; or,
an ordering manner according to the number of times of watching history; or,
an ordering manner according to the number of times of being marked; or,
an ordering manner according to program numbers of sub-level content corresponding to each card.

In conclusion, in these preferred embodiments, when receiving a direction control signal not corresponding to the switch direction in the second state, the display device switches to display another card directory, thereby achieving the following effects: switching to a different card directory can be achieved just by clicking the direction key on the remote controller, and during the operation, the user doesn't need to look at the remote controller, nor needs to memorize complex digital instructions in advance.

When receiving a direction control signal not corresponding to a predetermined direction in the first state, the display device directly switches the currently displayed sub-level content to the sub-level content corresponding to another card according to the direction control signal and a predetermined ordering manner among respective cards, thereby achieving the following effects: quickly switching to another sub-level content can be achieved just by clicking once the direction key on the remote controller.

When receiving an ok control signal in the first state, the display device switches to a third state of displaying sub-level content information list, thereby achieving the following effects: the sub-level content information list can be popped up quickly just by clicking the ok key on the remote controller.

When receiving a direction control signal of a designated direction in the first state, and the currently displayed sub-level content in the first state is a local play content or an online play content, the display device switches to a fourth state of displaying another sub-level content via a picture-in-picture window on the currently displayed sub-level content; when receiving an ok control signal in the fourth state, the display device switches to a fifth state of displaying another sub-level content displayed in the picture-in-picture window in full-screen mode, thereby achieving the following effects: when watching a local play content or an online play content, the user may check TV programs on-playing by the picture-in-picture function, so as to freely switch between two sub-level contents.

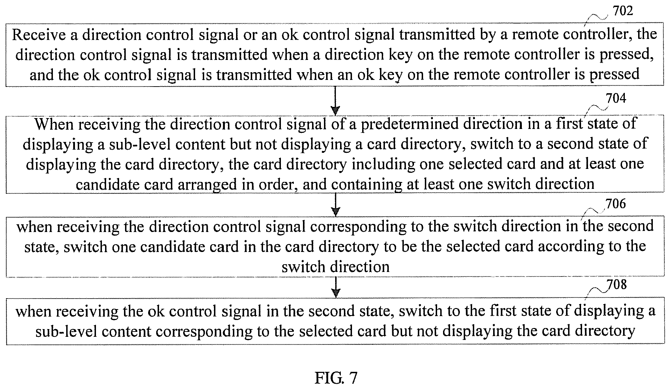

Referring to Fig. 7, which illustrates a method flowchart of a remote control method provided by an embodiment of the present disclosure, the remote control method is used in the display device provided by the embodiments shown in Fig. 1, Fig. 3 or Fig. 6. The remote control method includes the following steps.

In Step 702, a direction control signal or an ok control signal transmitted by a remote controller is received, wherein the direction control signal is transmitted when a direction key on the remote controller is pressed, and the ok control signal is transmitted when an ok key on the remote controller is pressed.

In Step 704, when receiving the direction control signal of a predetermined direction in a first state of displaying a sub-level content but not displaying a card directory, a second state of displaying the card directory is switched to, wherein the card directory includes one selected card and at least one candidate card arranged in order, and contains at least one switch direction.

In Step 706, when receiving the direction control signal corresponding to the switch direction in the second state, one candidate card in the card directory is switched to be the selected card according to the switch direction.

In Step 708, when receiving the ok control signal in the second state, the first state of displaying a sub-level content corresponding to the selected card but not displaying the card directory is switched to.

In conclusion, the remote control method provided by the embodiments of the present disclosure controls the display device to switch between the card directory and the sub-level content and switch among different cards in the card directory by receiving the direction control signal and the ok control signal transmitted by the remote controller, which solves the problem of low input efficiency caused by the digital keys on the remote controller, and achieves the following effects: the operation of switching among different sub-level contents can be achieved only by the direction keys and the ok key on the remote controller without using of the digital keys, thus the input manner is simple and of high efficiency, and during the operation, the user doesn't need to look at the remote controller, nor needs to memorize complex digital instructions in advance.

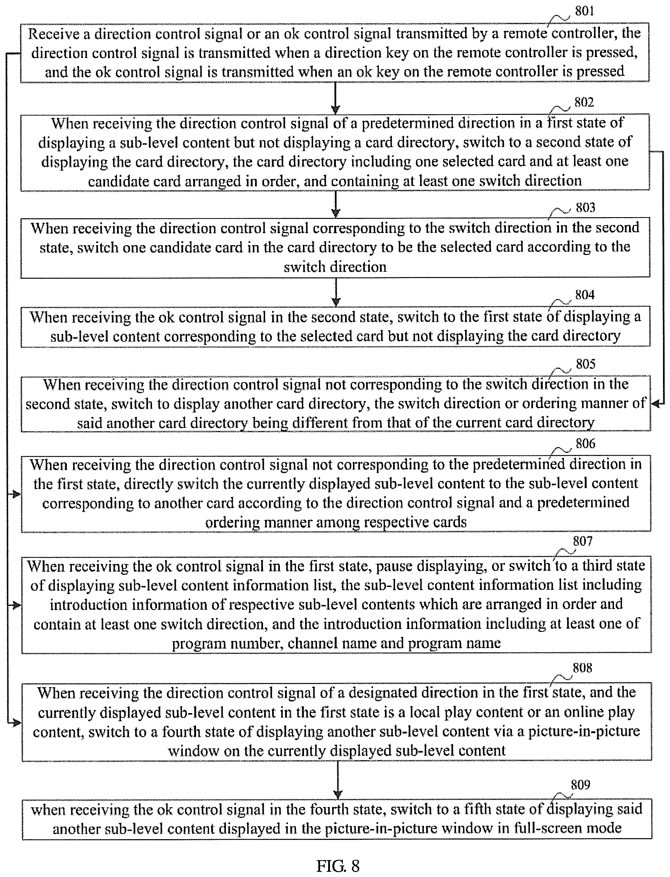

Referring to Fig. 8, which illustrates a method flowchart of a remote control method provided by another embodiment of the present disclosure, the remote control method is used in the display device provided by the embodiments shown in Fig. 1, Fig. 3 or Fig. 6. The remote control method includes the following steps.

In Step 801, a direction control signal or an ok control signal transmitted by a remote controller is received, wherein the direction control signal is transmitted when a direction key on the remote controller is pressed, and the ok control signal is transmitted when an ok key on the remote controller is pressed.

In Step 802, when receiving the direction control signal of a predetermined direction in a first state of displaying a sub-level content but not displaying a card directory, a second state of displaying the card directory is switched to, wherein the card directory includes one selected card and at least one candidate card arranged in order, and contains at least one switch direction;

The predetermined direction includes at least one of a left direction and a right direction, and when it simultaneously includes the left direction and the right direction, the two directions correspond to card directories of different ordering manners and/or different switch directions, respectively; alternatively, the predetermined direction includes at least one of an up direction and a down direction, and when it simultaneously includes the up direction and the down direction, the two directions correspond to card directories of different ordering manners and/or different switch directions, respectively.

The card directory includes at least one of a lateral card directory, a vertical card directory and an array card directory.

The lateral card directory includes one selected card and at least one candidate card arranged in a predetermined ordering manner, and the switch direction of the lateral card directory includes a left direction and/or a right direction.

The vertical card directory includes one selected card and at least one candidate card arranged in a predetermined ordering manner, and the switch direction of the vertical card directory includes an up direction and/or a down direction.

The array card directory includes one selected card and at least two candidate cards arranged in a predetermined ordering manner, and the switch direction of the array card directory includes at least two directions perpendicular to each other among a left direction, a right direction, an up direction and a down direction.

The predetermined ordering manner includes:
an ordering manner according to a time sequence of watching history; or,
an ordering manner according to the number of times of watching history; or,
an ordering manner according to the number of times of being marked; or,
an ordering manner according to program numbers of sub-level content corresponding to each card.

In Step 803, when receiving the direction control signal corresponding to the switch direction in the second state, one candidate card in the card directory is switched to be the selected card according to the switch direction.

In Step 804, when receiving the ok control signal in the second state, the first state of displaying a sub-level content corresponding to the selected card but not displaying the card directory is switched to.

In Step 805, when receiving the direction control signal not corresponding to the switch direction in the second state, another card directory is switched to display, the switch direction or ordering manner of said another card directory being different from that of the current card directory.

In Step 806, when receiving the direction control signal not corresponding to the predetermined direction in the first state, the currently displayed sub-level content is directly switched to the sub-level content corresponding to another card according to the direction control signal and a predetermined ordering manner among respective cards.

In Step 807, when receiving the ok control signal in the first state, displaying is paused, or a third state of displaying sub-level content information list is switched to, wherein the sub-level content information list includes introduction information of respective sub-level contents which are arranged in order and contain at least one switch direction, and the introduction information includes at least one of program number, channel name and program name;

In Step 808, when receiving the direction control signal of a designated direction in the first state, and the currently displayed sub-level content in the first state being a local play content or an online play content, a fourth state of displaying another sub-level content via a picture-in-picture window on the currently displayed sub-level content is switched to.

In Step 809, when receiving the ok control signal in the fourth state, a fifth state of displaying said another sub-level content displayed in the picture-in-picture window in full-screen mode is switched to.

In conclusion, the remote control method provided by the embodiments of the present disclosure controls the display device to switch between the card directory and the sub-level content and switch among different cards in the card directory by receiving the direction control signal and the ok control signal transmitted by the remote controller, which solves the problem of low input efficiency caused by the digital keys on the remote controller, and achieves the following effects: the operation of switching among different sub-level contents can be achieved only by the direction keys and the ok key on the remote controller without using of the digital keys, thus the input manner is simple and of high efficiency, and during the operation, the user doesn't need to look at the remote controller, nor needs to memorize complex digital instructions in advance.

Also, when receiving a direction control signal not corresponding to the switch direction in the second state, switching to display another card directory is performed, thereby achieving the following effects: switching to a different card directory can be achieved just by clicking the direction key on the remote controller, and during the operation, the user doesn't need to look at the remote controller, nor needs to memorize complex digital instructions in advance.

Also, when receiving a direction control signal not corresponding to a predetermined direction in the first state, directly switching the currently displayed sub-level content to the sub-level content corresponding to another card according to the direction control signal and a predetermined ordering manner among respective cards is performed, thereby achieving the following effects: quickly switching to another sub-level content can be achieved just by clicking once the direction key on the remote controller.

Also, when receiving an ok control signal in the first state, switching to a third state of displaying sub-level content information list is performed, thereby achieving the following effects: the sub-level content information list can be popped up quickly just by clicking the ok key on the remote controller.

Also, when receiving a direction control signal of a designated direction in the first state, and the currently displayed sub-level content in the first state being a local play content or an online play content, switching to a fourth state of displaying another sub-level content via a picture-in-picture window on the currently displayed sub-level content is performed; when receiving an ok control signal in the fourth state, switching to a fifth state of displaying another sub-level content displayed in the picture-in-picture window in full-screen mode is performed, thereby achieving the following effects: when watching a local play content or an online play content, the user may check TV programs on-playing by the picture-in-picture function, so as to freely switch between two sub-level contents.

The serial numbers of the above embodiments of the present disclosure are only used for describing, but not for showing the superiority and inferiority of the embodiments.

The person skilled in the art could understand that all or part of the steps for realizing the above embodiments may be accomplished by hardware, or by a program instructing relevant hardware, the program may be stored in a computer readable storage medium, and the above mentioned storage medium may be a read-only memory, a magnetic disk or an optical disk, etc.

## Claims

1. A remote control system comprising: a remote controller and a display device controlled by the remote controller, the remote controller comprising direction keys (520) respectively corresponding to different directions and an ok key (540); wherein,
the remote controller is configured to transmit a direction control signal of a corresponding direction to the display device when the direction key (520) is pressed;
the display device is configured to, when receiving the direction control signal of a predetermined direction in a first state of displaying a sub-level content but not displaying a first card directory, switch to a second state of displaying the first card directory, wherein the first card directory comprises one selected card and at least one candidate card arranged in order, and contains at least one switch direction;
the display device is further configured to, when receiving the direction control signal corresponding to the switch direction in the second state, switch one candidate card in the first card directory to be the selected card according to the switch direction;
the remote controller is further configured to transmit an ok control signal to the display device when the ok key (540) is pressed; and
the display device is configured to, when receiving the ok control signal in the second state, switch to the first state of displaying the sub-level content corresponding to the selected card but not displaying the first card directory, the remote control system being **characterized in that**
the display device is further configured to, when receiving the direction control signal not corresponding to the switch direction in the second state, switch to display a second card directory, the switch direction or an ordering manner of said second card directory being different from that of the first card directory, said ordering manners of the first and second card directories comprising:
- an ordering manner according to a time sequence of watching history; or,
- an ordering manner according to the number of times of watching history; or,
- an ordering manner according to the number of times of being marked; or,
- an ordering manner according to program numbers of sub-level content.

2. The remote control system according to claim 1, wherein
the display device is further configured to, when receiving the direction control signal not corresponding to the predetermined direction in the first state, directly switch the currently displayed sub-level content to the sub-level content corresponding to another card according to the direction control signal and a predetermined ordering manner . among respective cards.

3. The remote control system according to claim 1, wherein
the display device is further configured to, when receiving the ok control signal in the first state, pause displaying, or switch to a third state of displaying a sub-level content information list, wherein the sub-level content information list comprises an introduction information of respective sub-level contents which are arranged in order and contain at least one switch direction, and the introduction information comprises at least one of a program number, a channel name and a program name.

4. The remote control system according to claim 1, wherein
the display device is configured to, when receiving the direction control signal of a designated direction in the first state and the currently displayed sub-level content in the first state being a local play content or an online play content, switch to a fourth state of displaying another sub-level content via a picture-in-picture window on the currently displayed sub-level content; and
the display device is configured to, when receiving the ok control signal in the fourth state, switch to a fifth state of displaying said another sub-level content displayed in the picture-in-picture window in full-screen mode.

5. The remote control system according to any one of claims 1 to 4, wherein
the predetermined direction comprises at least one of a left direction and a right direction, and when the predetermined direction simultaneously comprises the left direction and the right direction, the two directions correspond to card directories of different ordering manners and/or different switch directions, respectively; or
the predetermined direction comprises at least one of an up direction and a down direction, and when the predetermined direction simultaneously comprises the up direction and the down direction, the two directions correspond to card directories of different ordering manners and/or different switch directions, respectively.

6. The remote control system according to claim 5, wherein
the first card directory comprises at least one of a lateral card directory, a vertical card directory and an array card directory;
the lateral card directory comprises one selected card and at least one candidate card arranged in a predetermined ordering manner, and the switch direction of the lateral card directory comprises a left direction and/or a right direction;
the vertical card directory comprises one selected card and at least one candidate card arranged in a predetermined ordering manner, and the switch direction of the vertical card directory comprises an up direction and/or a down direction; and
the array card directory comprises one selected card and at least two candidate cards arranged in a predetermined ordering manner, and the switch direction of the array card directory comprises at least two directions perpendicular to each other among the left direction, the right direction, the up direction and the down direction.

7. The remote control system according to claim 6, wherein the predetermined ordering manner comprises:
an ordering manner according to a time sequence of watching history; or,
an ordering manner according to the number of times of watching history; or,
an ordering manner according to the number of times of being marked; or,
an ordering manner according to program numbers of sub-level content corresponding to respective cards.

8. A display device comprising: a receiver (620), a control chip (560, 640) electrically connected to the receiver (620), and a display assembly (660) electrically connected to the control chip (560, 640); wherein,
the receiver (620) is configured to receive a direction control signal or an ok control signal transmitted by a remote controller, wherein the direction control signal is transmitted when a direction key (520) on the remote controller is pressed, and the ok control signal is transmitted when an ok key (540) on the remote controller is pressed;
the control chip (560, 640) is configured to, when the display assembly (660) is in a first state of displaying a sub-level content but not displaying a first card directory and the receiver (620) receives the direction control signal corresponding to a predetermined direction, control the display assembly (660) to switch to a second state of displaying the first card directory, wherein the first card directory comprises one selected card and at least one candidate card arranged in order, and contains at least one switch direction;
the control chip (560, 640) is further configured to, when the display assembly (660) is in the second state and the receiver (620) receives the direction control signal corresponding to the switch direction, control the display assembly (660) to switch one candidate card in the first card directory to be the selected card according to the switch direction; the display device being charcarterized in that the control chip being further configured, when receiving the direction control signal not corresponding to the switch direction in the second state, to control the display assembly to switch to display a second card directory, the switch direction or an ordering manner of said second card directory being different from that of the first card directory, said ordering manners of the first and second card directories comprising:
- an ordering manner according to a time sequence of watching history; or,
- an ordering manner according to the number of times of watching history; or,
- an ordering manner according to the number of times of being marked; or,
- an ordering manner according to program numbers of sub-level content, and
the control chip (560, 640) is further configured to, when the display assembly (660) is in the second state and the receiver (620) receives the ok control signal, control the display assembly (660) to switch to the first state of displaying the sub-level content corresponding to the selected card but not displaying the first card directory.

9. A remote control method comprising:
receiving (702) a direction control signal or an ok control signal transmitted by a remote controller, wherein the direction control signal is transmitted when a direction key on the remote controller is pressed, and the ok control signal is transmitted when an ok key on the remote controller is pressed;
when receiving the direction control signal of a predetermined direction in a first state of displaying a sub-level content but not displaying a first card directory, switching to(704) a second state of displaying the first card directory, wherein the first card directory comprises one selected card and at least one candidate card arranged in order, and contains at least one switch direction;
when receiving the direction control signal corresponding to the switch direction in the second state, switching(706) one candidate card in the first card directory to be the selected card according to the switch direction; the remote control method being **characterized in that**, in response to receiving the direction control signal not corresponding to the switch direction in the second state, switch to display a second card directory, the switch direction or an ordering manner of said second card directory being different from that of the first card directory, said ordering manners of the first and second card directories comprising:
- an ordering manner according to a time sequence of watching history; or,
- an ordering manner according to the number of times of watching history; or,
- an ordering manner according to the number of times of being marked; or,
- an ordering manner according to program numbers of sub-level content, and
when receiving the ok control signal in the second state, switching to(708) the first state of displaying the sub-level content corresponding to the selected card but not displaying the first card directory.

10. A computer program including instructions for executing the steps of a remote control method according to claim 9 when said program is executed by a computer.

11. A recording medium readable by a computer and having recorded thereon a computer program including instructions for executing the steps of a remote control method according to claim 9.

## Patentansprüche

1. Fernsteuerungssystem, umfassend: eine Fernsteuerung und eine Anzeigevorrichtung, die von der Fernsteuerung gesteuert wird, wobei die Fernsteuerung Richtungstasten (520), die jeweils unterschiedlichen Richtungen entsprechen, und eine OK-Taste (540) umfasst, wobei
die Fernsteuerung ausgebildet ist, ein Richtungssteuerungssignal einer entsprechenden Richtung an die Anzeigevorrichtung zu senden, wenn die Richtungstaste (520) gedrückt wird,
die Anzeigevorrichtung ausgebildet ist, wenn sie das Richtungssteuerungssignal einer vorbestimmten Richtung in einem ersten Zustand des Anzeigens eines Unterebeneninhalts aber nicht Anzeigens eines erstes Kartenverzeichnisses empfängt, in einen zweiten Zustand des Anzeigens des ersten Kartenverzeichnisses umzuschalten, wobei das erste Kartenverzeichnis eine ausgewählte Karte und mindestens eine Kandidatenkarte, die der Reihe nach angeordnet sind, umfasst und mindestens eine Umschaltrichtung enthält,
die Anzeigevorrichtung ferner ausgebildet ist, wenn sie das Richtungssteuerungssignal, das der Umschaltrichtung entspricht, in dem zweiten Zustand empfängt, gemäß der Umschaltrichtung auf eine Kandidatenkarte in dem ersten Kartenverzeichnis umzuschalten, um die ausgewählte Karte zu sein,
die Fernsteuerung ferner ausgebildet ist, ein OK-Steuerungssignal an die Anzeigevorrichtung zu senden, wenn die OK-Taste (540) gedrückt wird, und
die Anzeigevorrichtung ausgebildet ist, wenn sie das OK-Steuerungssignal in dem zweiten Zustand empfängt, in den ersten Zustand des Anzeigens des Unterebeneninhalts, der der ausgewählten Karte entspricht, aber nicht Anzeigens des ersten Kartenverzeichnisses umzuschalten, wobei das Fernsteuerungssystem **dadurch gekennzeichnet ist, dass**
die Anzeigevorrichtung ferner ausgebildet ist, wenn sie das Richtungssteuerungssignal, das nicht der Umschaltrichtung entspricht, in dem zweiten Zustand empfängt, umschalten, um ein zweites Kartenverzeichnisses anzuzeigen, wobei die Umschaltrichtung oder eine Art der Reihenfolge des zweiten Kartenverzeichnisses sich von der des ersten Kartenverzeichnisses unterscheidet, wobei die Arten der Reihenfolgen des ersten und zweiten Kartenverzeichnisses umfassen:
- eine Art der Reihenfolge gemäß einer zeitlichen Abfolge eines Betrachtungsverlaufs oder
- eine Art der Reihenfolge gemäß der Anzahl von Malen eines Betrachtungsverlaufs oder
- eine Art der Reihenfolge gemäß der Anzahl von Malen, markiert zu werden, oder
- eine Art der Reihenfolge gemäß Programmzahlen von Unterebeneninhalt.

2. Fernsteuerungssystem nach Anspruch 1, wobei
die Anzeigevorrichtung ferner ausgebildet ist, wenn sie das Richtungssteuerungssignal, das nicht der vorbestimmten Richtung entspricht, in dem ersten Zustand empfängt, den aktuell angezeigten Unterebeneninhalt direkt auf den Unterebeneninhalt, der einer anderen Karte entspricht, umzuschalten, gemäß dem Richtungssteuerungssignal und einer vorbestimmten Art der Reihenfolge unter jeweiligen Karten.

3. Fernsteuerungssystem nach Anspruch 1, wobei
die Anzeigevorrichtung ferner ausgebildet ist, wenn sie das OK-Steuerungssignal in dem ersten Zustand empfängt, die Anzeige zu pausieren oder in einen dritten Zustand des Anzeigens einer Informationsliste eines Unterebeneninhalts umzuschalten, wobei die Informationsliste eines Unterebeneninhalts eine Einleitungsinformation von jeweiligen Unterebeneninhalten umfasst, die der Reihe nach angeordnet sind und mindestens eine Umschaltrichtung enthalten, und die Einleitungsinformation mindestens eines von einer Programmzahl, einem Kanalnamen, und einem Programmnamen umfasst.

4. Fernsteuerungssystem nach Anspruch 1, wobei
die Anzeigevorrichtung ausgebildet ist, wenn sie das Richtungssteuerungssignal einer bestimmten Richtung in dem ersten Zustand empfängt und der aktuell angezeigte Unterebeneninhalt in dem ersten Zustand ein lokaler Spielinhalt oder ein Online-Spielinhalt ist, in einen vierten Zustand des Anzeigens eines anderen Unterebeneninhalts durch ein Bild-in-Bild-Fenster auf dem aktuell angezeigten Unterebeneninhalt umzuschalten, und
die Anzeigevorrichtung ausgebildet ist, wenn sie das OK-Steuerungssignal in dem vierten Zustand empfängt, in einen fünften Zustand des Anzeigens des anderen Unterebeneninhalts, der in dem Bild-in-Bild-Fenster im Vollbildmodus angezeigt wird, umzuschalten.

5. Fernsteuerungssystem nach einem der Ansprüche 1 bis 4, wobei
die vorbestimmte Richtung mindestens eine von einer linken Richtung und einer rechten Richtung umfasst, und wenn die vorbestimmte Richtung gleichzeitig die linke Richtung und die rechte Richtung umfasst, die zwei Richtungen Kartenverzeichnissen mit unterschiedlichen Arten der Reihenfolge und/oder unterschiedlichen Umschalterrichtungen entsprechen, oder
die vorbestimmte Richtung mindestens eine von einer Aufwärtsrichtung und/oder einer Abwärtsrichtung umfasst, und wenn die vorbestimmte Richtung gleichzeitig die Aufwärtsrichtung und die Abwärtsrichtung umfasst, die zwei Richtungen Kartenverzeichnissen mit unterschiedlichen Arten der Reihenfolge und/oder unterschiedlichen Umschaltrichtungen entsprechen.

6. Fernsteuerungssystem nach Anspruch 5, wobei
das erste Kartenverzeichnis mindestens eines von einem lateralen Kartenverzeichnis, einem vertikalen Kartenverzeichnis, und einem Array-Kartenverzeichnis umfasst,
das laterale Kartenverzeichnis eine ausgewählte Karte und mindestens eine Kandidatenkarte umfasst, die in einer vorbestimmten Art der Reihenfolge angeordnet sind, und die Umschaltrichtung des lateralen Kartenverzeichnisses eine linke Richtung und/oder eine rechte Richtung umfasst,
das vertikale Kartenverzeichnis eine ausgewählte Karte und mindestens eine Kandidatenkarte umfasst, die in einer vorbestimmten Art der Reihenfolge angeordnet sind, und die Umschaltrichtung des vertikalen Kartenverzeichnisses eine Aufwärtsrichtung und/oder eine Abwärtsrichtung umfasst, und
das Array-Kartenverzeichnis eine ausgewählte Karte und mindestens zwei Kandidatenkarten umfasst, die in einer vorbestimmten Art der Reihenfolge angeordnet sind, und die Umschaltrichtung des Array-Kartenverzeichnisses mindestens zwei zueinander senkrechte Richtungen von der linken Richtung, der rechten Richtung, der Aufwärtsrichtung, und der Abwärtsrichtung umfasst.

7. Fernsteuerungssystem nach Anspruch 6, wobei die vorbestimmte Art der Reihenfolge umfasst:
- eine Art der Reihenfolge gemäß einer zeitlichen Abfolge eines Betrachtungsverlaufs oder
- eine Art der Reihenfolge gemäß der Anzahl von Malen eines Betrachtungsverlaufs oder
- eine Art der Reihenfolge gemäß der Anzahl von Malen, markiert zu werden, oder
- eine Art der Reihenfolge gemäß Programmzahlen von Unterebeneninhalt, der jeweiligen Karten entspricht.

8. Anzeigevorrichtung, umfassend: einen Empfänger (620), einen Steuerchip (560, 640), der elektrisch mit dem Empfänger (620) verbunden ist, und eine Anzeigeanordnung (660), die elektrisch mit dem Steuerchip (560, 640) verbunden ist, wobei
der Empfänger (620) ausgebildet ist, ein Richtungssteuerungssignal oder ein OK-Steuerungssignal, das von einer Fernsteuerung gesendet wurde, zu empfangen, wobei das Richtungssteuerungssignal gesendet wird, wenn eine Richtungstaste (520) an der Fernsteuerung gedrückt wird, und das OK-Steuerungssignal gesendet wird, wenn eine OK-Taste (540) auf der Fernsteuerung gedrückt wird,
der Steuerchip (560, 640) ausgebildet ist, wenn die Anzeigeanordnung (660) sich in einem ersten Zustand des Anzeigens eines Unterebeneninhalts aber nicht Anzeigens eines ersten Kartenverzeichnisses befindet, und der Empfänger (620) das entsprechende Richtungssteuerungssignal, das einer vorbestimmten Richtung entspricht, empfängt, die Anzeigeanordnung (660) zu steuern, in einen zweiten Zustand des Anzeigens des ersten Kartenverzeichnisses umzuschalten, wobei das erste Kartenverzeichnis eine ausgewählte Karte und mindestens eine Kandidatenkarte, die der Reihe nach angeordnet sind, umfasst und mindestens eine Umschaltrichtung enthält,
der Steuerchip (560, 640) ferner ausgebildet ist, wenn sich die Anzeigeanordnung (660) in dem zweiten Zustand befindet und der Empfänger (620) das Richtungssteuerungssignal empfängt, das der Umschaltrichtung entspricht, die Anzeigeanordnung (660) zu steuern, eine Kandidatenkarte in dem ersten Kartenverzeichnis gemäß der Umschalterrichtung umzuschalten, die ausgewählte Karte zu ein, wobei die Anzeigevorrichtung **dadurch gekennzeichnet ist, dass** der Steuerchip ferner ausgebildet ist, wenn er das Richtungssteuerungssignal, das nicht der Umschaltrichtung entspricht, empfängt, umzuschalten, um ein zweites Kartenverzeichnisses anzuzeigen, wobei die Umschaltrichtung oder eine Art der Reihenfolge des zweiten Kartenverzeichnisses unterschiedlich zu der des ersten Kartenverzeichnisses ist, wobei die Arten der Reihenfolgen des ersten und zweiten Kartenverzeichnisses umfassen:
- eine Art der Reihenfolge gemäß einer zeitlichen Abfolge eines Betrachtungsverlaufs oder
- eine Art der Reihenfolge gemäß der Anzahl von Malen eines Betrachtungsverlaufs oder
- eine Art der Reihenfolge gemäß der Anzahl von Malen, markiert zu werden, oder
- eine Art der Reihenfolge gemäß Programmzahlen von Unterebeneninhalt, und der Steuerchip (560, 640) ferner ausgebildet ist, wenn die Anzeigeanordnung (660) sich in dem zweiten Zustand befindet und der Empfänger (620) das OK-Steuerungssignal empfängt, die Anzeigeanordnung (660) zu steuern, in den ersten Zustand des Anzeigens des Unterebeneninhalts, der der ausgewählten Karte entspricht, aber nicht Anzeigens des ersten Kartenverzeichnisses umzuschalten.

9. Fernsteuerungsverfahren, umfassend:
Empfangen (702) eines Richtungssteuerungssignals oder eines OK-Steuerungssignals, das von einer Fernsteuerung gesendet wurde, wobei das Richtungssteuerungssignal gesendet wird, wenn eine Richtungstaste an der Fernsteuerung gedrückt wird, und das OK-Steuerungssignal gesendet wird, wenn eine OK-Taste auf dem Fernsteuerung wird gedrückt,
Empfangen des Richtungssteuerungssignals einer vorbestimmten Richtung in einem ersten Zustand des Anzeigens eines Unterebeneninhalts aber nicht Anzeigens eines ersten Kartenverzeichnisses, Umschalten (704) in einen zweiten Zustand des Anzeigens des ersten Kartenverzeichnisses, wobei das erste Kartenverzeichnis eine ausgewählte Karte und mindestens eine Kandidatenkarte, die der Reihe nach angeordnet sind, umfasst und mindestens eine Umschaltrichtung enthält,
wenn das Richtungssteuerungssignal, das der Umschaltrichtung entspricht, in dem zweiten Zustand empfangen wird, Umschalten (706) einer Kandidatenkarte in dem ersten Kartenverzeichnis, um die ausgewählte Karte zu sein, gemäß der Umschaltrichtung, wobei das Fernsteuerungsverfahren **dadurch gekennzeichnet ist, dass** in Reaktion auf den Empfang des Richtungssteuerungssignals, das nicht der Umschaltrichtung entspricht, in den zweiten Zustand umgeschaltet wird, um ein zweites Kartenverzeichnis anzuzeigen, wobei die Umschaltrichtung oder eine Art der Reihenfolge des zweiten Kartenverzeichnisses unterschiedlich von der des ersten Kartenverzeichnisses ist, wobei die Arten der Reihenfolgen des ersten und zweiten Kartenverzeichnisses umfassen:
- eine Art der Reihenfolge gemäß einer zeitlichen Abfolge eines Betrachtungsverlaufs oder
- eine Art der Reihenfolge gemäß der Anzahl von Malen eines Betrachtungsverlaufs oder
- eine Art der Reihenfolge gemäß der Anzahl von Malen, markiert zu werden, oder
- eine Art der Reihenfolge gemäß Programmzahlen von Unterebeneninhalt, und wenn das OK-Steuerungssignal in dem zweiten Zustand empfangen wird, Umschalten (708) in den ersten Zustand des Anzeigens des Unterebeneninhalts, der der ausgewählten Karte entspricht, aber nicht Anzeigens des erstes Kartenverzeichnisses.

10. Computerprogramm, aufweisend Anweisungen zum Ausführen der Schritte eines Fernsteuerungsverfahrens nach Anspruch 9, wenn das Programm von einem Computer ausgeführt wird.

11. Aufzeichnungsmedium, das von einem Computer lesbar ist und auf dem ein Computerprogramm aufgezeichnet ist, das Anweisungen zum Ausführen der Schritte eines Fernsteuerungsverfahrens nach Anspruch 9 aufweist.

## Revendications

1. Système de télécommande comprenant : une télécommande et un dispositif d'affichage commandé par la télécommande, la télécommande comprenant des touches de direction (520) correspondant respectivement aux différentes directions et une touche ok (540) ; dans lequel,
la télécommande est configurée pour transmettre un signal de commande de direction d'une direction correspondant au dispositif d'affichage lorsque la touche de direction (520) est pressée ;
le dispositif d'affichage est configuré, lors de la réception du signal de commande de direction d'une direction prédéterminée dans un premier état affichant un contenu de sous-niveau mais n'affichant pas un premier répertoire de fiches, pour basculer sur un deuxième état affichant le premier répertoire de fiches, dans lequel le premier répertoire de fiches comprend une fiche sélectionnée et au moins une fiche candidate agencée dans l'ordre, et contient au moins une direction de basculement ;
le dispositif d'affichage est configuré en outre, lors de la réception du signal de commande de direction correspondant à la direction de basculement dans le deuxième état, pour faire basculer une fiche candidate dans le premier répertoire de fiches pour qu'elle soit la fiche sélectionnée en fonction de la direction de basculement ;
la télécommande est configurée en outre pour transmettre un signal de commande ok au dispositif d'affichage lorsque la touche ok (540) est pressée ; et
le dispositif d'affichage est configuré, lors de la réception du signal de commande ok dans le deuxième état, pour basculer sur le premier état affichant le contenu de sous-niveau correspondant à la fiche sélectionnée mais n'affichant pas le premier répertoire de fiches, le système de télécommande étant **caractérisé en ce que**
le dispositif d'affichage est configuré en outre, lors de la réception du signal de commande de direction ne correspondant pas à la direction de basculement dans le deuxième état, pour basculer de manière à afficher un deuxième répertoire de fiches, la direction de basculement ou une manière d'ordonnancement dudit deuxième répertoire de fiches étant différente de celle du premier répertoire de fiches, lesdites manières d'ordonnancement des premier et deuxième répertoires de fiches comprenant :
- une manière d'ordonnancement en fonction d'une séquence temporelle d'historique d'observation ; ou,
- une manière d'ordonnancement en fonction du nombre de fois associées à l'historique d'observation ; ou,
- une manière d'ordonnancement en fonction du nombre de fois repérés ; ou,
- une manière d'ordonnancement en fonction des numéros de programme du contenu de sous-niveau.

2. Système de télécommande selon la revendication 1, dans lequel
le dispositif d'affichage est configuré en outre, lors de la réception du signal de commande de direction ne correspondant pas à la direction prédéterminée dans le premier état, pour faire basculer directement le contenu de sous-niveau actuellement affiché sur le contenu de sous-niveau correspondant à une autre fiche en fonction du signal de commande de direction et d'une manière d'ordonnancement prédéterminée parmi les fiches respectives.

3. Système de télécommande selon la revendication 1, dans lequel
le dispositif d'affichage est configuré, lors de la réception du signal de commande ok dans le premier état, pour interrompre l'affichage, ou pour basculer dans un troisième état affichant une liste d'informations de contenu de sous-niveau, dans lequel la liste d'informations de contenu de sous-niveau comprend une information d'introduction de contenus de sous-niveau respectifs qui sont agencés dans l'ordre et contiennent au moins une direction de basculement, et les informations d'introduction comprennent au moins un parmi un numéro de programme, un nom de canal et un nom de programme.

4. Système de télécommande selon la revendication 1, dans lequel
le dispositif d'affichage est configuré, lors de la réception du signal de commande de direction d'une direction désignée dans le premier état et que le contenu de sous-niveau affiché actuellement dans le premier état est un contenu de jeu local ou un contenu de jeu en ligne, pour basculer sur un quatrième état affichant un autre contenu de sous-niveau par le biais d'une fenêtre d'incrustation d'image sur le contenu de sous-niveau affiché actuellement ; et
le dispositif d'affichage est configuré, lors de la réception du signal de commande ok dans le quatrième état, pour basculer sur un cinquième état affichant ledit autre contenu de sous-niveau affiché dans la fenêtre d'incrustation d'image en mode plein écran.

5. Système de télécommande selon l'une quelconque des revendications 1 à 4, dans lequel
la direction prédéterminée comprend au moins une parmi une direction à gauche et une direction à droite, et lorsque la direction prédéterminée comprend simultanément la direction à gauche et la direction à droite, les deux directions correspondent aux répertoires de fiches de différentes manières d'ordonnancement et/ou de différentes directions de basculement, respectivement ; ou
la direction prédéterminée comprend au moins une parmi une direction vers le haut et une direction vers le bas, et lorsque la direction prédéterminée comprend simultanément la direction vers le haut et la direction vers le bas, les deux directions correspondent à des répertoires de fiches de différentes manières d'ordonnancement et/ou de différentes directions de basculement, respectivement.

6. Système de télécommande selon la revendication 5, dans lequel
le premier répertoire de fiches comprend au moins un répertoire de fiches latéral, un répertoire de fiches vertical et un répertoire de fiches en matrice ;
le répertoire de fiches latéral comprend une fiche sélectionnée et au moins une fiche candidate agencée selon une manière d'ordonnancement prédéterminée, et la direction de basculement du répertoire de fiches latéral comprend une direction vers la gauche et/ou une direction vers la droite ;
le répertoire de fiches vertical comprend une fiche sélectionnée et au moins une fiche candidate agencée selon une manière d'ordonnancement prédéterminée, et la direction de basculement du répertoire de fiches vertical comprend une direction vers le haut et/ou une direction vers le bas ; et
le répertoire de fiches en matrice comprend une fiche sélectionnée et au moins deux fiches candidates agencées selon une manière d'ordonnancement prédéterminée, et la direction de basculement du répertoire de fiches en matrice comprend au moins deux directions perpendiculaires l'une à l'autre parmi la direction vers la gauche, la direction vers la droite, la direction vers le haut et la direction vers le bas.

7. Système de télécommande selon la revendication 6, dans lequel la manière d'ordonnancement prédéterminée comprend :
- une manière d'ordonnancement en fonction d'une séquence temporelle d'historique d'observation ; ou,
- une manière d'ordonnancement en fonction du nombre de fois associées à l'historique d'observation ; ou,
- une manière d'ordonnancement en fonction du nombre de fois repérés ; ou,
- une manière d'ordonnancement en fonction des numéros de programme du contenu de sous-niveau correspondant aux fiches respectives.

8. Dispositif d'affichage comprenant : un récepteur (620), une puce de commande (560, 640) connectée électriquement au récepteur (620), et un ensemble d'affichage (660) connecté électriquement à la puce de commande (560, 640) ; dans lequel,
le récepteur (620) est configuré pour recevoir un signal de commande de direction ou un signal de commande ok transmis par une télécommande, dans lequel le signal de commande de direction est transmis lorsqu'une touche de direction (520) sur la télécommande est pressée, et le signal de commande ok est transmis lorsqu'une touche ok (540) sur la télécommande est pressée ;
la puce de commande (560, 640) est configurée, lorsque l'ensemble d'affichage (660) se trouve dans un premier état affichant un contenu de sous-niveau mais n'affichant pas un répertoire de fiches et que le récepteur (620) reçoit le signal de commande de direction correspondant à une direction prédéterminée, pour commander l'ensemble d'affichage (660) pour qu'il bascule vers un deuxième état affichant le premier répertoire de fiches, dans lequel le premier répertoire de fiches comprend une fiche sélectionnée et au moins une fiche candidate agencée dans l'ordre, et contient au moins une direction de basculement ;
la puce de commande (560, 640) est configurée, lorsque l'ensemble d'affichage (660) se trouve dans le deuxième état et que le récepteur (620) reçoit le signal de commande de direction correspondant à la direction de basculement, pour commander l'ensemble d'affichage (660) pour qu'il fasse basculer une fiche candidate dans le premier répertoire de fiches pour qu'elle soit la fiche sélectionnée en fonction de la direction de basculement ; le dispositif d'affichage étant **caractérisé en ce que** la puce de commande est configurée en outre, lors de la réception du signal de commande de direction ne correspondant pas à la direction de basculement dans le deuxième état, pour commander l'ensemble d'affichage pour qu'il bascule de manière à afficher un deuxième répertoire de fiches, la direction de basculement ou une manière d'ordonnancement dudit deuxième répertoire de fiches étant différente de celle du premier répertoire de fiches, lesdites manières d'ordonnancement des premier et deuxième répertoires de fiches comprenant :
- une manière d'ordonnancement en fonction d'une séquence temporelle d'historique d'observation ; ou,
- une manière d'ordonnancement en fonction du nombre de fois associées à l'historique d'observation ; ou,
- une manière d'ordonnancement en fonction du nombre de fois repérés ; ou,
- une manière d'ordonnancement en fonction des numéros de programme du contenu de sous-niveau, et
la puce de commande (560, 640) est configurée en outre, lorsque le système d'affichage (660) se trouve dans le deuxième état et que le récepteur (620) reçoit le signal de commande ok, pour commander l'ensemble d'affichage (660) pour qu'il bascule dans le premier état affichant le contenu de sous-niveau correspondant à la fiche sélectionnée mais n'affichant pas le premier répertoire de fiches.

9. Procédé de télécommande comprenant :
la réception (702) d'un signal de commande de direction ou d'un signal de commande ok transmis par la télécommande, dans lequel le signal de commande de direction est transmis lorsqu'une touche de direction sur la télécommande est pressée, et le signal de commande ok est transmis lorsqu'une touche ok sur la télécommande est pressée ;
lors de la réception du signal de commande de direction d'une direction prédéterminée dans un premier état affichant un contenu de sous-niveau mais n'affichant pas un premier répertoire de fiches, le basculement (704) sur un deuxième état affichant le premier répertoire de fiches, dans lequel le premier répertoire de fiches comprend une fiche sélectionnée et au moins une fiche candidate agencée dans l'ordre, et contient au moins une direction de basculement ;
lors de la réception du signal de commande de direction correspondant à la direction de basculement dans le deuxième état, le basculement (706) d'une fiche candidate dans le premier répertoire de fiches pour qu'elle soit la fiche sélectionnée en fonction de la direction de basculement ; le procédé de télécommande étant **caractérisé en ce que**, en réponse à la réception du signal de commande de direction ne correspondant pas à la direction de basculement dans le deuxième état, un basculement s'effectue de manière à afficher un deuxième répertoire de fiches, la direction de basculement ou une manière d'ordonnancement dudit deuxième répertoire de fiches étant différente de celle du premier répertoire de fiches, lesdites manières d'ordonnancement des premier et deuxième répertoires de fiches comprenant :
- une manière d'ordonnancement en fonction d'une séquence temporelle d'historique d'observation ; ou,
- une manière d'ordonnancement en fonction du nombre de fois associées à l'historique d'observation ; ou,
- une manière d'ordonnancement en fonction du nombre de fois repérés ; ou,
- une manière d'ordonnancement en fonction des numéros de programme du contenu de sous-niveau, et
lors de la réception du signal de commande ok dans le deuxième état, le basculement (708) sur le premier état affichant le contenu de sous-niveau correspondant à la fiche sélectionnée mais n'affichant pas le premier répertoire de fiches.

10. Programme informatique comportant des instructions destinées à exécuter les étapes d'un procédé de télécommande selon la revendication 9 lorsque ledit programme est exécuté par un ordinateur.

11. Support d'enregistrement lisible par ordinateur sur lequel est enregistré un programme informatique comportant des instructions destinées à exécuter les étapes d'un procédé de télécommande selon la revendication 9.
